(19) Europäisches Patentamt / European Patent Office / Office européen des brevets

(11) **EP 4 664 495 A1**

(12) **EUROPEAN PATENT APPLICATION**
published in accordance with Art. 153(4) EPC

(43) Date of publication:
**17.12.2025 Bulletin 2025/51**

(21) Application number: **24753296.3**

(22) Date of filing: **05.02.2024**

(51) International Patent Classification (IPC):
**H01F 7/121** (2006.01)     **F16F 9/46** (2006.01)
**F16K 31/06** (2006.01)

(52) Cooperative Patent Classification (CPC):
**F16F 9/46; F16K 31/06; H01F 7/121**

(86) International application number:
**PCT/JP2024/003669**

(87) International publication number:
**WO 2024/166853 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.02.2023 JP 2023017524**

(71) Applicant: **Astemo, Ltd.**
**Chiyoda-ku,**
**Tokyo 1000004 (JP)**

(72) Inventors:
• **HOTTA, Miho**
  **Hitachinaka-shi, Ibaraki 312-8503 (JP)**
• **YAMAMOTO, Yasuhisa**
  **Hitachinaka-shi, Ibaraki 312-8503 (JP)**
• **MUZVIDZIWA, Milton**
  **Hitachinaka-shi, Ibaraki 312-8503 (JP)**

(74) Representative: **Hoffmann Eitle**
**Patent- und Rechtsanwälte PartmbB**
**Arabellastraße 30**
**81925 München (DE)**

(54) **SOLENOID ACTUATOR AND SOLENOID VALVE**

(57)     Provided is a solenoid actuator (33) including: a coil (39); a tubular core (41) and a tube (42); an armature (43); an actuation pin (44); and a bush (45). The actuation pin (44) is non-integrated with the armature (43). The bush (45) guides the actuation pin (44) in an axial direction. The armature (43) is movable toward one side in the axial direction with a first gap (S1) with respect to an inner peripheral surface of the tube (42). The bush (45) guides the actuation pin (44) in the axial direction with a second gap (S2), which is smaller than the first gap (S1), with respect to an outer peripheral surface of the actuation pin (44).

Fig. 4

## Description

TECHNICAL FIELD

The present disclosure relates to a solenoid actuator and an electromagnetic valve, which are to be used in, for example, a damping force adjustment mechanism of a damping force adjustable shock absorber.

BACKGROUND ART

In a vehicle such as a four-wheeled vehicle, a shock absorber (damper) is provided between a vehicle body (sprung) side and each wheel (unsprung) side. As such shock absorber for a vehicle, there has been known a damping force adjustable hydraulic shock absorber (damping force adjustable shock absorber) that variably adjusts a damping force in accordance with running conditions, behavior of the vehicle, and the like. The damping force adjustable hydraulic shock absorber constitutes a semi-active suspension for a vehicle.

The damping force adjustable hydraulic shock absorber variably adjusts a generated damping force by, for example, adjusting a valve opening pressure of a damping force adjustment valve with a damping force variable actuator (damping force adjustment mechanism). As the damping force variable actuator, for example, a solenoid actuator is used. Here, in Patent Literature 1, there is described a solenoid (solenoid actuator) in which a movable core (movable element) and a shaft portion are joined (coupled) together and the shaft portion is supported by two bushes (bearing members).

CITATION LIST

PATENT LITERATURE

PTL 1: Japanese Patent Application Laid-open No. 2017-211062

SUMMARY OF INVENTION

TECHNICAL PROBLEM

In the solenoid of Patent Literature 1, not only the two bushes (bearing members) for supporting the shaft portion are required, but also the movable core (movable element) and the shaft portion are joined (coupled) together. Thus, in order to suppress the inclination of the movable core (movable element) and suppress hysteresis, coaxiality of four components including the two bushes (bearing members), the movable core (movable element), and the shaft portion and dimensional tolerances thereof are required to be regulated with high accuracy. As a result, processing costs (manufacturing costs) may increase.

One object of the present invention is to provide a solenoid actuator and an electromagnetic valve, which enable achievement of both suppression of hysteresis and a reduction in processing costs (manufacturing costs).

According to the present invention, preferably, there is provided a solenoid actuator, including: a coil having a cylindrical shape; a stator fixed to an inner peripheral surface of the coil; and a movable element, which is contactable with the stator and is movable on an inner peripheral surface of the stator toward one side in an axial direction in accordance with a current applied to the coil. A gap in a radial direction defined between the stator and the movable element includes: at least one small gap being small in size; and at least one large gap being larger in size than the small gap, which are arranged in the axial direction. The stator includes a guide tube having a bottomed tubular shape, which is configured to guide movement of the movable element on an inner peripheral surface. The guide tube has: a large-diameter portion, which extends from a bottom portion side toward the one side in the axial direction and defines the large gap between the large-diameter portion and the movable element; and a small-diameter portion, which extends directly or indirectly continuously from the large-diameter portion toward the one side in the axial direction, has an inner diameter smaller than an inner diameter of the large-diameter portion, and defines the small-gap between the small-diameter portion and the movable element.

Further, according to the present invention, preferably, there is provided a solenoid actuator, including: a coil having a cylindrical shape; a stator fixed to an inner peripheral surface of the coil; and a movable element, which is contactable with the stator and is movable on an inner peripheral surface of the stator toward one side in an axial direction in accordance with a current applied to the coil. A gap in a radial direction defined between the stator and the movable element includes: at least one small gap being small in size; and at least one large gap being larger in size than the small gap, which are arranged in the axial direction. The movable element has a flange portion on a portion in the axial direction, the flange portion projecting in a radial direction with respect to a remaining portion, and the flange portion defines the small gap at a position at which the flange portion is opposed to the stator. The remaining portion defines the large gap at a position at which the remaining portion is opposed to the stator.

Further, according to the present invention, preferably, there is provided an electromagnetic valve having a valve mechanism, the electromagnetic valve including: a solenoid actuator including: a coil having a cylindrical shape; a stator fixed to an inner peripheral surface of the coil; a movable element, which is movable toward one side in an axial direction with a first gap with respect to an inner peripheral surface of the stator in accordance with a current applied to the coil; and a driven member being non-integrated with the movable element, the driven member being configured to actuate the valve mechanism when being brought into abutment against the movable element in the axial direction to be driven in the axial direction; and a bearing member configured to guide the driven member in the axial direction with a second gap being smaller than the first gap with respect to an outer peripheral surface of the driven member; and an elastic member configured to bias the driven member toward another side in the axial direction.

According to the present invention, both suppression of hysteresis and a reduction in processing costs (manufacturing costs) can be achieved.

BRIEF DESCRIPTION OF DRAWINGS

Fig. 1 is a longitudinal sectional view for illustrating a damping force adjustable shock absorber into which a solenoid actuator and an electromagnetic valve according to a first embodiment are incorporated.
Fig. 2 is an enlarged sectional view for illustrating a damping force adjustment mechanism in Fig. 1.
Fig. 3 is a sectional view for illustrating the damping force adjustment mechanism when a coil is energized, which is taken at the same position as a position at which Fig. 2 is taken.
Fig. 4 is a sectional view for illustrating the solenoid actuator in Fig. 3.
Fig. 5 is a sectional view for illustrating a solenoid actuator according to a second embodiment.
Fig. 6 is a sectional view for illustrating a movable element (armature) in Fig. 5 alone.
Fig. 7 is a sectional view for illustrating a movable element (armature) according to a first modification example.
Fig. 8 is a sectional view for illustrating a movable element (armature) according to a second modification example.
Fig. 9 is a front view for illustrating a movable element (armature) according to a third modification example.
Fig. 10 is a plan view for illustrating the movable element (armature) according to the third modification example.
Fig. 11 is a sectional view for illustrating a movable element (armature) according to a fourth modification example.
Fig. 12 is a sectional view for illustrating a movable element (armature) according to a fifth modification example.
Fig. 13 is a sectional view for illustrating a driven member (actuation pin) according to a sixth modification example.
Fig. 14 is a sectional view for illustrating a stator (a one-side stator, an another-side stator, a guide tube) and a movable element (armature) according to a third embodiment in a simplified manner, which is taken at the same position as a position at which Fig.

5 is taken.
Fig. 15 is a sectional view for illustrating a state in which the movable element (armature) is inclined in an exaggerated manner, which is taken at the same position as a position at which Fig. 14 is taken.
Fig. 16 is a sectional view for illustrating a dimensional relationship between the movable element (armature) and the stator (the one-side stator, the another-side stator, the guide tube), which is taken at the same position as a position at which Fig. 15 is taken.
Fig. 17 is a sectional view for illustrating a guide tube (A) according to the third embodiment and a guide tube (B) according to a seventh modification example.

DESCRIPTION OF EMBODIMENTS

Solenoid actuators and electromagnetic valves according to embodiments and modification examples are described below with reference to the accompanying drawings, taking as an example a case in which the solenoid actuator and the electromagnetic valve are used in a damping force adjustment mechanism (damping force adjustment device) of a damping force adjustable shock absorber (damping force adjustable hydraulic shock absorber) to be incorporated into a vehicle such as a four-wheeled vehicle.

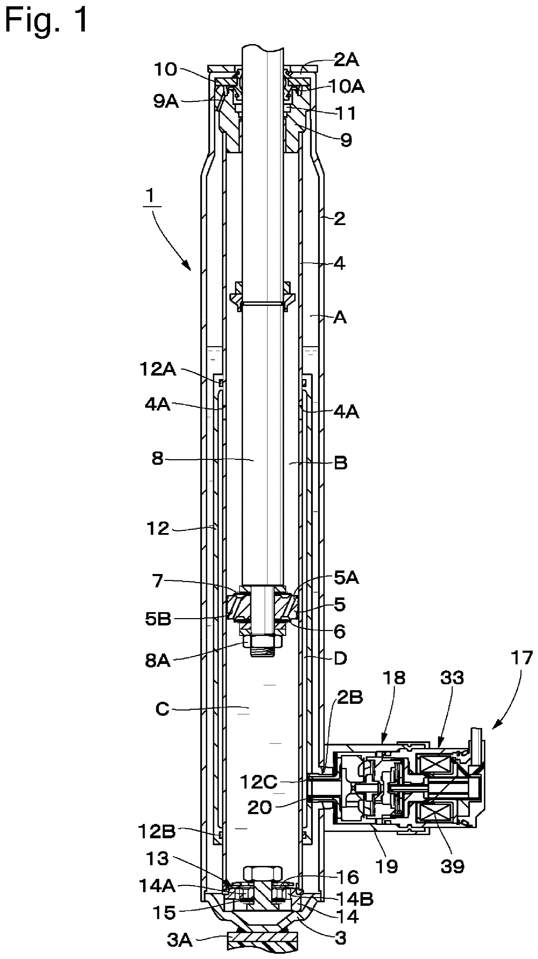

In Fig. 1 to Fig. 4, a first embodiment is illustrated. In Fig. 1, a damping force adjustable hydraulic shock absorber 1 (hereinafter referred to as "shock absorber 1") includes: an outer tube 2 and an inner tube 4 as a cylinder; a piston 5; a piston rod 8; and a damping force adjustment mechanism 17. The outer tube 2 is formed in a bottomed tubular shape and forms an outer shell of the shock absorber 1. A lower end of the outer tube 2 is closed with a bottom cap 3 by using welding means or the like. An upper end of the outer tube 2 is formed as a crimped portion 2A, which is bent radially inward. A rod guide 9 and a sealing member 10 are provided between the crimped portion 2A and the inner tube 4. Meanwhile, an opening 2B is formed in a lower portion of the outer tube 2 so as to be coaxial with a connection port 12C of an intermediate cylinder 12. The damping force adjustment mechanism 17 is mounted to the outer tube 2 so as to be opposed to the opening 2B. Further, a mounting eye 3A, which is to be mounted on, for example, a wheel side of a vehicle, is provided to the bottom cap 3.

Inside the outer tube 2, the inner tube 4 is provided coaxially with the outer tube 2. The inner tube 4 forms a cylinder together with the outer tube 2. A lower end of the inner tube 4 is fitted and mounted over a bottom valve 13. An upper end of the inner tube 4 is fitted and mounted over the rod guide 9. A working liquid (liquid oil) as a hydraulic fluid or working fluid is enclosed inside the outer tube 2 and the inner tube 4. The working liquid is not limited to oil, and may be, for example, water mixed with an additive or the like. A reservoir chamber A having an annular shape is defined between the inner tube 4 and the outer tube 2. Gas is enclosed together with the liquid oil in the reservoir chamber A. This gas may be air in an atmospheric state, or a gas such as a compressed nitrogen gas or the like may be used. The reservoir chamber A compensates for advancement and retraction of the piston rod 8. At intermediate positions on the inner tube 4 in a longitudinal direction (axial direction) thereof, oil holes 4A that allow a rod-side oil chamber B to be constantly in communication with an annular oil chamber D are formed in a radial direction.

The piston 5 is slidably inserted into the inner tube 4. The piston 5 partitions an inside of the inner tube 4 into the rod-side oil chamber B and a bottom-side oil chamber C. A plurality of oil passages 5A and a plurality of oil passages 5B, which allow communication between the rod-side oil chamber B and the bottom-side oil chamber C, are formed through the piston 5 so as to be spaced apart from each other in a circumferential direction. A disc valve 6 on an extension side is provided on a lower end surface of the piston 5. While the piston 5 is slidably displaced upward during an extension stroke of the piston rod 8, the disc valve 6 on the extension side is opened at a pressure in the rod-side oil chamber B exceeding a relief set pressure and relieves this pressure toward the bottom-side oil chamber C via the oil passages 5A. The relief set pressure is set higher than a valve opening pressure that is used when the damping force adjustment mechanism 17 is set to "hard".

A check valve 7 on a retraction side, which is opened when the piston 5 is slidably displaced downward during a retraction stroke of the piston rod 8 and is closed otherwise, is provided on an upper end surface of the piston 5. The check valve 7 permits the liquid oil in the bottom-side oil chamber C to flow through the oil passages 5B toward the rod-side oil chamber B and inhibits the liquid oil from flowing in the opposite direction. A valve opening pressure of the check valve 7 is set to a pressure lower than a valve opening pressure that is used when the damping force adjustment mechanism 17 is set to "soft", and substantially no damping force is generated. The phrase "substantially no damping force is generated" refers to generation of a force equal to or lower than friction of the piston 5 or the sealing member 10, which does not affect motions of the vehicle.

The piston rod 8 extends in the axial direction inside the inner tube 4. A lower end of the piston rod 8 is inserted into the inner tube 4. The piston 5 is fixed to the lower end of the piston rod 8 with a nut 8A. An upper end of the piston rod 8 projects to an outside of the outer tube 2 and the inner tube 4 through the rod guide 9. The lower end of the piston rod 8 may be further extended so as to project outward from a bottom portion (for example, the bottom cap 3) side to thereby form a so-called double-rod structure.

The rod guide 9 having a stepped tubular shape is provided to an upper end of the inner tube 4. The rod guide 9 positions an upper portion of the inner tube 4 at a center of the outer tube 2 and guides the piston rod 8 slidably in the axial direction on an inner periphery side thereof. The sealing member 10 having an annular shape is provided between the rod guide 9 and the crimped portion 2A of the outer tube 2. The sealing member 10 is an elastic material such as rubber baked onto a metal annular plate having a hole in its center, through which the piston rod 8 is inserted, and seals a space from the piston rod 8 through sliding contact of its inner periphery with an outer periphery side of the piston rod 8.

A lip seal 10A serving as a check valve extending in such a manner as to be in contact with the rod guide 9 is formed on a lower surface of the sealing member 10. The lip seal 10A is arranged between an oil reservoir chamber 11 and the reservoir chamber A. The lip seal 10A permits the liquid oil or the like in the oil reservoir chamber 11 to flow toward the reservoir chamber A through a return passage 9A of the rod guide 9 and inhibits flow in the opposite direction.

The intermediate cylinder 12 is disposed between the outer tube 2 and the inner tube 4. The intermediate cylinder 12 is mounted on, for example, an outer periphery side of the inner tube 4 with upper and lower tubular seals 12A and 12B provided therebetween. The intermediate cylinder 12 internally defines the annular oil chamber D that extends in such a manner as to surround the outer periphery side of the inner tube 4 over its entire circumference. The annular oil chamber D is an oil chamber independent of the reservoir chamber A. The annular oil chamber D is constantly in communication with the rod-side oil chamber B via the oil holes 4A in the radial direction that are formed in the inner tube 4. That is, the annular oil chamber D defines a flow passage in which flow of the liquid oil is generated by extension and retraction of the piston rod 8. The connection port 12C to which a connection pipe body 20 of a damping force adjustment valve 18 is mounted is formed in a lower end of the intermediate cylinder 12.

The bottom valve 13 is provided between the bottom cap 3 and the inner tube 4 so as to be positioned at the lower end of the inner tube 4. The bottom valve 13 includes: a valve body 14, which separates the reservoir chamber A and the bottom-side oil chamber C from each other between the bottom cap 3 and the inner tube 4; a disc valve 15 on the retraction side, which is provided on a lower surface side of the valve body 14; and an extension-side check valve 16 provided on an upper surface side of the valve body 14. Oil passages 14A and 14B, which allow communication between the reservoir chamber A and the bottom-side oil chamber C, are formed in the valve body 14 so as to be spaced apart from each other in the circumferential direction.

When the piston 5 is slidably displaced downward during the retraction stroke of the piston rod 8, the disc valve 15 on the retraction side is opened at a pressure inside the bottom-side oil chamber C exceeding a relief set pressure and relieves this pressure via the oil passages 14A toward the reservoir chamber A. The relief set pressure is set to a pressure higher than a valve opening pressure that is used when the damping force adjustment mechanism 17 is set to "hard".

The extension-side check valve 16 is opened when the piston 5 is slidably displaced upward during the extension stroke of the piston rod 8, and the extension-side check valve 16 is closed otherwise. The check valve 16 permits the liquid oil in the reservoir chamber A to flow through the oil passages 14B toward the bottom-side oil chamber C and inhibits the liquid oil from flowing in the opposite direction. A valve opening pressure of the check valve 16 is set to a pressure lower than a valve opening pressure that is used when the damping force adjustment mechanism 17 is set to "soft", and substantially no damping force is generated.

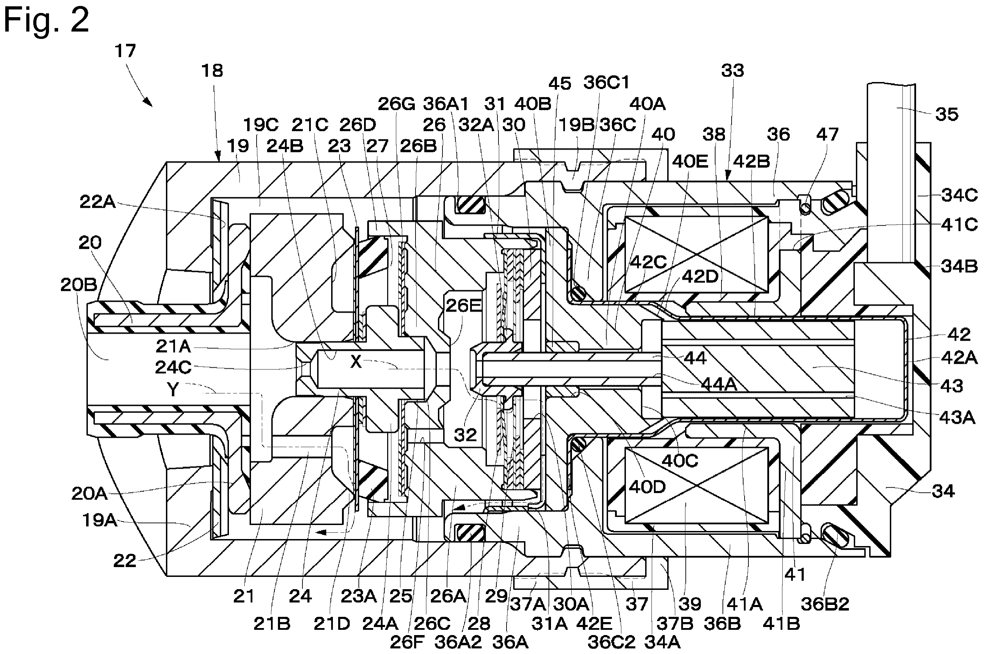

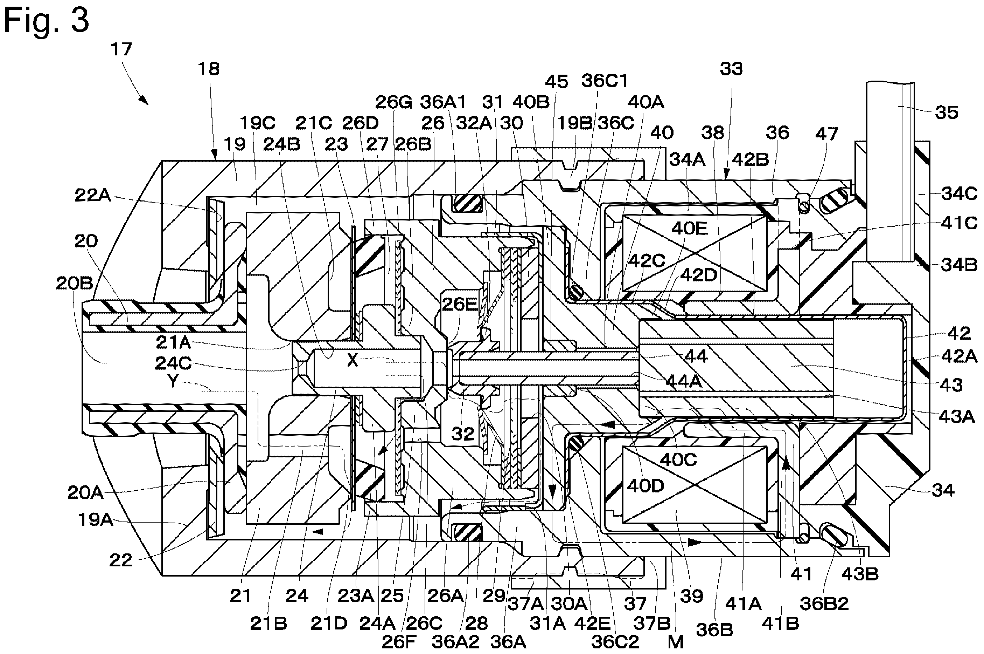

Next, the damping force adjustment mechanism 17 for variably adjusting a damping force generated by the shock absorber 1 is described with reference to Fig. 2 and Fig. 3 in addition to Fig. 1. In Fig. 2, there is illustrated a valve opened state in which a pilot valve element 32 is separated from a valve seat portion 26E of a pilot body 26 when a coil 39 of a solenoid actuator 33 is not energized. Meanwhile, in Fig. 3, there is illustrated a valve closed state in which the pilot valve element 32 is seated on the valve seat portion 26E of the pilot body 26 based on energization of the coil 39 of the solenoid actuator 33.

As illustrated in Fig. 1, the damping force adjustment mechanism 17 is provided to the outer tube 2 of the shock absorber 1 so as to be positioned on a lower end side of the annular oil chamber D serving as a flow passage. That is, the damping force adjustment mechanism 17 is arranged so that a proximal end thereof (left end in Fig. 1 to Fig. 3, which corresponds to one end) is located between the reservoir chamber A and the annular oil chamber D. A distal end (right end in Fig. 1 to Fig. 3, which corresponds to another end) of the damping force adjustment mechanism 17 projects radially outward from a lower portion of the outer tube 2. The damping force adjustment mechanism 17 includes: the damping force adjustment valve 18 that generates a damping force; and the solenoid actuator 33 that drives the damping force adjustment valve 18.

Specifically, the damping force adjustment mechanism 17 generates a damping force by controlling flow of the liquid oil from the annular oil chamber D to the reservoir chamber A with the damping force adjustment valve 18. That is, the damping force adjustment mechanism 17 variably adjusts a generated damping force by adjusting a valve opening pressure of the damping force adjustment valve 18 (the pilot valve element 32, and also a main valve 23) with the solenoid actuator 33, which is used as a damping force variable actuator.

The damping force adjustment valve 18 includes: a valve case 19; the connection pipe body 20; a valve member 21; the main valve 23; and the pilot valve element 32. The valve case 19 is formed in a substantially cylindrical shape, and has a proximal end firmly fixed around the opening 2B of the outer tube 2 and a distal end projecting radially outward from the outer tube 2. The connection pipe body 20 has a proximal end connected to the connection port 12C of the intermediate cylinder 12 and a distal end formed as a flange portion 20A having an annular shape, and the flange portion 20A is disposed inside the valve case 19 with a gap therebetween. The valve member 21 is in abutment against the flange portion 20A of the connection pipe body 20.

As illustrated in Fig. 2 and Fig. 3, the proximal end of the valve case 19 is formed as an inner flange portion 19A that projects radially inward. The distal end of the valve case 19 serves as a fixing portion that allows an inner periphery-side engagement portion 19B of the valve case 19 to be engaged with a tubular case 36 of the solenoid actuator 33 to achieve fixing by crimping. A space between an inner peripheral surface of the valve case 19 and an outer peripheral surface of the valve member 21 and between the inner peripheral surface of the valve case 19 and an outer peripheral surface of the pilot body 26 and the like serves as an oil chamber 19C having an annular shape that is constantly in communication with the reservoir chamber A.

An inside of the connection pipe body 20 serves as an oil passage 20B having one end (left end in Fig. 2 and Fig. 3) being in communication with the annular oil chamber D and another end (right end in Fig. 2 and Fig. 3) extending to a position of the valve member 21. A spacer 22 having a circular annular shape is held between the flange portion 20A of the connection pipe body 20 and the inner flange portion 19A of the valve case 19. The spacer 22 is a member that allows communication between the oil chamber 19C and the reservoir chamber A. Thus, a plurality of cutouts 22A, which serve as oil passages in a radial direction for allowing communication between the oil chamber 19C and the reservoir chamber A, are formed in the spacer 22 so as to radially extend. The spacer 22 may be omitted and cutouts (grooves) for defining oil passages may be radially formed in the inner flange portion 19A of the valve case 19.

A center hole 21A, which is positioned in a center in the radial direction and extends in an axial direction, is formed in the valve member 21. Further, a plurality of oil passages 21B are formed in the valve member 21 around the center hole 21A so as to be spaced apart from each other in a circumferential direction. Each of the oil passages 21B has one end (left end in Fig. 2 and Fig. 3) that is constantly in communication with the oil passage 20B side of the connection pipe body 20. Further, an annular recessed portion 21C, which is formed so as to surround openings of the oil passages 21B on another side, and an annular valve seat 21D positioned on a radially outer side of the annular recessed portion 21C, which the main valve 23 is separated from and seated on, are formed on an end surface of the valve member 21 on another end side (right end side in Fig. 2 and Fig. 3). The oil passages 21B of the valve member 21 are flow passages through which a pressure oil flows at a flow rate in accordance with an opening degree of the main valve 23 between the oil passage 20B of the connection pipe body 20, which is in communication with the annular oil chamber D, and the oil chamber 19C of the valve case 19, which is in communication with the reservoir chamber A.

An inner periphery side of the main valve 23 is held between the valve member 21 and a large-diameter portion 24A of a pilot pin 24. An outer periphery side of the main valve 23 being a disc valve is seated on the annular valve seat 21D of the valve member 21. An elastic sealing member 23A is firmly fixed to an outer periphery portion of the main valve 23 on a back surface side. The main valve 23 is separated from the annular valve seat 21D and is opened under pressure on the oil passages 21B side (annular oil chamber D side) of the valve member 21. In this manner, the oil passages 21B (annular oil chamber D side) of the valve member 21 are brought into communication with the oil chamber 19C (reservoir chamber A side). In this case, the valve opening pressure of the main valve 23 is variably controlled (adjusted) in accordance with a pressure in a back-pressure chamber 27.

The pilot pin 24 is formed in a stepped cylindrical shape and has the large-diameter portion 24A formed at an intermediate portion in the axial direction. The pilot pin 24 has a center hole 24B extending in the axial direction on an inner periphery side. An orifice 24C is formed at one end portion (end portion on the connection pipe body 20 side) of the center hole 24B. One end (left end in Fig. 2 and Fig 3) of the pilot pin 24 is press-fitted into the center hole 21A of the valve member 21. Under this state, the large-diameter portion 24A of the pilot pin 24 holds the main valve 23 in cooperation with the valve member 21.

Another end (right end in Fig. 2 and Fig. 3) of the pilot pin 24 is fitted into a center hole 26C of the pilot body 26. Oil passages 25 extending in the axial direction are formed between the center hole 26C of the pilot body 26 and the another end of the pilot pin 24. These oil passages 25 are in communication with the back-pressure chamber 27 defined between the main valve 23 and the pilot body 26. In other words, a plurality of oil passages 25 extending in the axial direction are formed in the circumferential direction in a side surface of the another end of the pilot pin 24, and other regions in the circumferential direction are press-fitted into the center hole 26C of the pilot body 26.

The pilot body 26 is formed as a substantially bottomed tubular body and includes: a cylindrical portion 26A having a stepped hole defined inside; and a bottom portion 26B that closes the cylindrical portion 26A. The center hole 26C, into which the another end of the pilot pin 24 is fitted, is formed in the bottom portion 26B of the pilot body 26. A projecting tube portion 26D, which is positioned on a radially outer side and projects toward the valve member 21 over the entire circumference, is formed integrally with one end of the bottom portion 26B of the pilot body 26. The elastic sealing member 23A of the main valve 23 is liquid-tightly fitted to an inner peripheral surface of the projecting tube portion 26D to thereby define the back-pressure chamber 27 between the main valve 23 and the pilot body 26. The back-pressure chamber 27 generates a pressure (an inner pressure, a pilot pressure) in a valve closing direction with respect to the main valve 23, that is, a pressure for pressing the main valve 23 in a direction in which the main valve 23 is seated on the annular valve seat 21D of the valve member 21.

The valve seat portion 26E, which the pilot valve element 32 is separated from and seated on, is formed on another end of the bottom portion 26B of the pilot body 26 so as to surround the center hole 26C. An oil passage 26F penetrating the bottom portion 26B in the axial direction is formed on an outer periphery side of the valve seat portion 26E. When an internal pressure of the back-pressure chamber 27 is excessively increased as a result of a valve opening operation of the main valve 23, the oil passage 26F allows the liquid oil in the back-pressure chamber 27 to escape toward the pilot valve element 32 via a flexible disc 26G.

Further, a return spring 28, a disc valve 29, a holding plate 30 and the like are disposed inside the cylindrical portion 26A of the pilot body 26. The return spring 28 serves as an elastic member that biases the pilot valve element 32 in a direction away from the valve seat portion 26E of the pilot body 26. The disc valve 29 constitutes a fail-safe valve that functions when the solenoid actuator 33 is in a non-energized state (when the pilot valve element 32 is the farthest away from the valve seat portion 26E). The holding plate 30 has an oil passage 30A formed on its center side. As the elastic member, for example, a hollow rubber ball serving as an air spring or a flat spring exhibiting the same functions may be used. Further, the pilot valve element itself may be formed of a material that allows the pilot valve element to function as the elastic member.

A cap 31 is fitted and fixed over an opening end of the cylindrical portion 26A of the pilot body 26 under a state in which the return spring 28, the disc valve 29, the holding plate 30 and the like are disposed inside the cylindrical portion 26A. Cutouts 31A are formed in the cap 31, for example, at four positions spaced apart from each other in the circumferential direction. As indicated by the arrows X in Fig. 2 and Fig. 3, the cutouts 31A serve as flow passages that allow the liquid oil, which has flowed toward the solenoid actuator 33 through the oil passage 30A of the holding plate 30, to flow into the oil chamber 19C (reservoir chamber A side).

The pilot valve element 32 constitutes a pilot valve (control valve) together with the pilot body 26. The pilot valve element 32 is provided on one end side (anchor 40 side) of an actuation pin 44 of the solenoid actuator 33. The pilot valve element 32 is formed in a stepped cylindrical shape. A distal end portion of the pilot valve element 32, that is, a distal end portion that is separated from and seated on the valve seat portion 26E of the pilot body 26 has a tapered shape. The actuation pin 44 of the solenoid actuator 33 is fitted and fixed inside the pilot valve element 32. An opening degree (valve opening pressure) of the pilot valve element 32 is adjusted in accordance with the energization (current value) of the solenoid actuator 33 (coil 39).

That is, the pilot valve (the pilot body 26 and the pilot valve element 32) serving as a control valve is controlled through movement of the actuation pin 44 of the solenoid actuator 33 (more specifically, an armature 43 being in abutment against the actuation pin 44) in the axial direction. A flange portion 32A serving as a spring seat is formed on a proximal end (solenoid actuator 33 side) of the pilot valve element 32 over the entire circumference. When the solenoid actuator 33 (coil 39) is in a non-energized state, that is, the pilot valve element 32 is the farthest away from the valve seat portion 26E, the flange portion 32A is brought into abutment against an inner periphery portion of the disc valve 29 to thereby constitute a fail-safe valve.

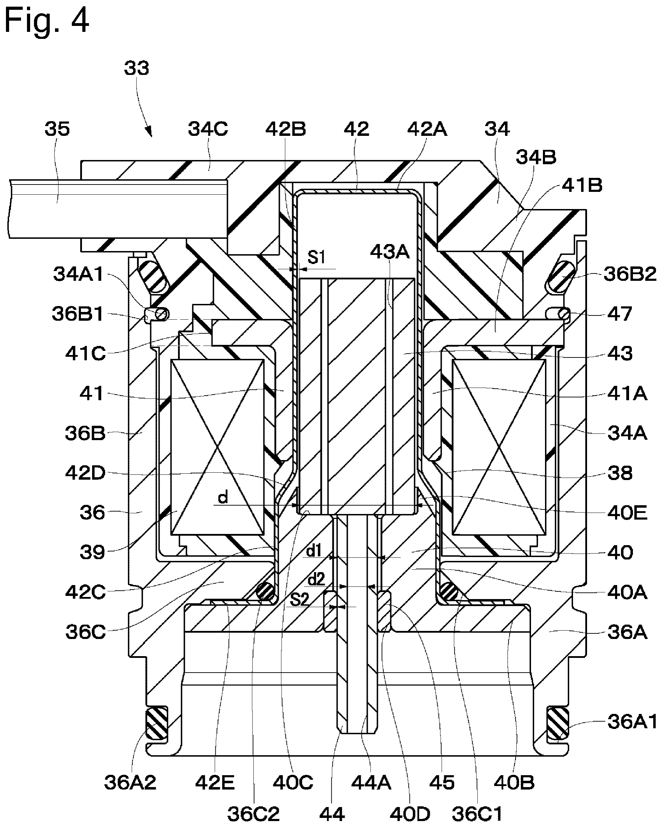

Next, the solenoid actuator 33, which constitutes the damping force adjustment mechanism 17 together with the damping force adjustment valve 18, is described with reference to Fig. 4 in addition to Fig. 1 to Fig. 3. The reference symbols are indicated in Fig. 4 in which the upper side corresponds to the right side in the right-and-left direction in Fig. 2 and Fig. 3. That is, the right-and-left direction in Fig. 1 to Fig. 3 corresponds to the up-and-down direction in Fig. 4.

The solenoid actuator 33 is incorporated into the damping force adjustment mechanism 17 as a damping force variable actuator (electromagnetic actuator) for the damping force adjustment mechanism 17. That is, the solenoid actuator 33 is used for a damping force adjustable shock absorber so as to adjust valve opening and closing operations of the damping force adjustment valve 18. The solenoid actuator 33 includes: an overmold 34 serving as a cover; the tubular case 36 serving as a housing member; a bobbin 38; the coil 39; the anchor 40 serving as a one-side fixed core (one-side stator); a tubular core 41 serving as an another-side fixed core (another-side stator); a tube 42 serving as a guide member (cap member, guide tube); the armature 43 serving a movable element (movable core); and the actuation pin 44 serving as a rod. The solenoid actuator 33 is formed of, for example, a proportional solenoid.

The overmold 34 forms an outer shell of the solenoid actuator 33 on a distal end side (a right end side in Fig. 2 and Fig. 3, which corresponds to another end side, an upper end side in Fig. 4). The overmold 34 accommodates the coil 39. The overmold 34 is formed of a thermosetting resin or the like into a bottomed tubular shape as a whole and covers an outer periphery side of the coil 39. The overmold 34 includes: a tubular portion 34A having a cylindrical shape, which covers the outer periphery side of the coil 39; and a lid portion 34B, which closes another end (a right end in Fig. 2 and Fig. 3, an upper end in Fig. 4) of the tubular portion 34A. A part of the lid portion 34B in the circumferential direction is formed as a cable outlet portion 34C to which a cable 35 formed of a lead wire is connected.

The tubular case 36 forms an outer shell of the solenoid actuator 33 in the circumferential direction. The tubular case 36 accommodates the pilot body 26 and the coil 39. The tubular case 36 includes: a valve-side tube portion 36A, which is positioned on an outer periphery side of the pilot valve (the pilot body 26 and the pilot valve element 32); a coil-side tube portion 36B positioned on an outer periphery side of the tubular portion 34A of the overmold 34; and a flange portion 36C, which is positioned between the valve-side tube portion 36A and the coil-side tube portion 36B and projects radially inward over the entire circumference. The tubular case 36 is formed of a magnetic body (magnetic material) as a substantially cylindrical yoke and forms a magnetic path when energized.

The cap 31 for the damping force adjustment valve 18 is fitted (internally fitted) to a radially inner side of the valve-side tube portion 36A. The valve case 19 of the damping force adjustment valve 18 is fitted (externally fitted) to a radially outer side of the valve-side tube portion 36A. A seal groove 36A1 is formed in an outer peripheral surface of the valve-side tube portion 36A over the entire circumference. A seal ring 36A2 is mounted in the seal groove 36A1. The seal ring 36A2 liquid-tightly seals a space between the tubular case 36 and the valve case 19 of the damping force adjustment valve 18.

The tubular portion 34A of the overmold 34 is fitted (internally fitted) to a radially inner side of the coil-side tube portion 36B. A retention ring 47 serving as a clip for retaining the tubular case 36 and the overmold 34 in a fitted state is provided between an inner peripheral surface of the coil-side tube portion 36B on a distal end side (another end side) and an outer periphery surface of the overmold 34 (tubular portion 34A). For the retention ring, a case-side ring groove 36B1 is formed in an inner peripheral surface of the tubular case 36 (coil-side tube portion 36B), and a coil-side ring groove 34A1 is formed in an outer peripheral surface of the overmold 34 (tubular portion 34A).

The retention ring 47 is a ring member being expandable and contractible in inner-diameter dimension based on elastic deformation, for example, a segmental circular annular (C-shaped) ring member or a ring member having protruding portions projecting to a radially outer side and recessed portions recessed to a radially inner side in an alternating manner. When the retention ring 47 is engaged (provided to extend) between the case-side ring groove 36B1 and the coil-side ring groove 34A1, the overmold 34 is inhibited from being disengaged from the tubular case 36. Further, a seal ring 36B2 is provided between the inner peripheral surface of the coil-side tube portion 36B and the outer peripheral surface of the overmold 34 (tubular portion 34A) so as to be positioned closer to an opening of the tubular case 36 (coil-side tube portion 36B) than the retention ring 47. The seal ring 36B2 liquid-tightly seals a space between the tubular case 36 and the overmold 34.

A tapered surface 36C1 formed of an inclined surface having a diameter gradually decreasing from one end side (a left end side in Fig. 2 and Fig. 3, a lower end side in Fig. 4) toward another end side is formed on an inner periphery side of the flange portion 36C of the tubular case 36. The tube 42 is fitted to an inner periphery side of the flange portion 36C. In this case, a seal ring 36C2 is provided between the tapered surface 36C1 of the flange portion 36C and the tube 42.

As illustrated in Fig. 2 and Fig. 3, a coupling ring 37 is provided on an outer periphery side of the valve case 19 so as to be positioned on another end side of the valve case 19. The coupling ring 37 is formed in a substantially cylindrical shape. An outer periphery-side engagement portion 37A, which is engaged with the inner periphery-side engagement portion 19B of the valve case 19, and a flange portion 37B, which has an inner-diameter dimension smaller than an inner-diameter dimension of the outer periphery-side engagement portion 37A, are formed on an inner side of the coupling ring 37. The coupling ring 37 is a member for externally covering and fixing an engagement crimped portion between the inner periphery-side engagement portion 19B of the valve case 19 and the tubular case 36. That is, the coupling ring 37 is fixed to the valve case 19 through engagement of the outer periphery-side engagement portion 37A with the inner periphery-side engagement portion 19B.

As illustrated in Fig. 2 to Fig. 4, the bobbin 38 is provided on an inner periphery side of the overmold 34. The bobbin 38 is formed of a resin member such as a thermosetting resin. The bobbin 38 is formed by, for example, molding and covers an inner periphery side of the coil 39. Another end of the bobbin 38 is connected to the cable outlet portion 34C of the overmold 34. The tubular core 41 is embedded in the bobbin 38. In this case, an inner periphery side of the tubular core 41 is exposed from the bobbin 38. The solenoid actuator 33 may have a so-called bobbin-less structure without the bobbin 38.

The coil 39 is provided on an outer periphery side of the bobbin 38. That is, the coil 39 is wound around the bobbin 38. An outer periphery side of the coil 39 is covered with the tubular portion 34A of the overmold 34. The inner periphery side of the coil 39 is covered with the bobbin 38. The coil 39 generates a magnetic force when supplied with electricity (energized) through the cable 35. When the bobbin-less structure is adopted, the coil 39 is configured, for example, as follows. After the coil 39 is wound around a core material into an appropriate shape, the core material is removed and the coil 39 is embedded in a molding resin together with the tubular core 41 described later. Specifically, in this case, the bobbin 38 is replaced by the molding resin.

The anchor 40 is provided so as to be opposed to the armature 43 in the axial direction. The anchor 40 is positioned on an inner periphery side of the tubular case 36 and the bobbin 38 (coil 39). The anchor 40 includes: a tube portion 40A, into which the actuation pin 44 is inserted, on its inner side; and a flange portion 40B projecting radially outward from an outer peripheral surface of the tube portion 40A. When a magnetic force is generated by the coil 39, the anchor 40 attracts the armature 43. In this case, an outer peripheral surface of the flange portion 40B is in abutment against an inner peripheral surface of the valve-side tube portion 36A of the tubular case 36.

Thus, magnetic flux can be efficiently transferred between the flange portion 40B and the valve-side tube portion 36A. Further, a bottomed hole portion 40C, into which the armature 43 is inserted when the armature 43 is attracted, is formed in an end face of the tube portion 40A, which is opposed to the armature 43. A bush fitting hole 40D is formed on an inner periphery side of the anchor 40. A bush 45 that supports the actuation pin 44 is fitted into the bush fitting hole 40D.

Another end of the anchor 40, which is located on the armature 43 side, is formed as a conical portion 40E having an annular shape. That is, the conical portion 40E is formed on an outer periphery side of the bottomed hole portion 40C. An outer peripheral surface of the conical portion 40E is formed into a tapered surface so as to achieve a linear (straight) magnetic characteristic between the anchor 40 and the armature 43. That is, the outer peripheral surface of the conical portion 40E is inclined in a direction in which its outer-diameter dimension increases toward one end side corresponding to the flange portion 40B side.

The tubular core 41, which is also referred to as an insert core or plate, is positioned inside the bobbin 38. That is, the tubular core 41 is provided on a radially inner side of the bobbin 38 so as to cover the inner periphery side and another end of the coil 39. The tubular core 41 is formed of a magnetic body (magnetic material) as a flanged cylindrical yoke.

The tubular core 41 includes: a tube portion 41A, into which the armature 43 is inserted, on its inner side; and a flange portion 41B projecting radially outward from an outer peripheral surface of the tube portion 41A. In this case, an inner periphery side of the tube portion 41A, which is opposed to the armature 43, is exposed from the bobbin 38, and forms a magnetic circuit (magnetic path) that allows magnetic flux to be transferred between the tube portion 41A and the armature 43.

Meanwhile, a plurality of (for example, four) cutouts 41C for connecting the cable 35 to the coil 39 are formed in the circumferential direction on an outer periphery side of the flange portion 41B. The cutouts 41C have not only a function to allow passage of the cable 35 but also a function to improve resin run during molding of the overmold 34 and the bobbin 38. Further, regions of an outer peripheral surface of the flange portion 41B, in which the cutouts 41C are absent, are in abutment against the inner peripheral surface of the coil-side tube portion 36B of the tubular case 36. Thus, magnetic flux can be efficiently transferred between the flange portion 41B and the coil-side tube portion 36B.

The tube 42 is positioned on the inner periphery side of the coil 39 (bobbin 38). That is, the tube 42 is provided on the inner periphery side of the coil 39 (bobbin 38) so as to surround the anchor 40, the armature 43, and the like. The tube 42 is formed of, for example, a thin plate of a non-magnetic material into a bottomed stepped cylindrical shape, and includes a bottom portion 42A, a first tube portion 42B, a second tube portion 42C, a tapered portion 42D, and a flange portion 42E. The tube 42 achieves liquid-tightness of an inside of the solenoid actuator 33 to thereby prevent the liquid oil in the damping force adjustment valve 18 from flowing out to an outside.

The bottom portion 42A of the tube 42 is positioned on an inner periphery side of the lid portion 34B of the overmold 34. The bottom portion 42A closes another end of the tube 42. The first tube portion 42B is positioned at a position on an outer periphery side of the armature 43. The second tube portion 42C is provided at a position on an outer periphery side of the anchor 40. An external dimension of the second tube portion 42C is set larger than an external dimension of the first tube portion 42B. The first tube portion 42B and the second tube portion 42C are connected to each other with the tapered portion 42D. The tapered portion 42D forms an inclined surface in such a manner as to extend along inclination of the conical portion 40E of the anchor 40. The flange portion 42E is formed by bending one end of the second tube portion 42C radially outward. The flange portion 42E is positioned between the flange portion 36C of the tubular case 36 and the flange portion 40B of the anchor 40.

The armature 43 is arranged on the inner periphery side of the coil 39 and the tube 42. The armature 43 is a movable element (movable core) made of a magnetic body (magnetic material) that is provided movably in a winding axis direction of the coil 39.

That is, the armature 43 is provided on an inner side of the coil 39 so as to be movable in the axial direction. The armature 43 is provided separately from the actuation pin 44. The armature 43 is formed of, for example, an iron-based magnetic body into a substantially cylindrical shape. When a magnetic force is generated by the coil 39, the armature 43 is attracted by the anchor 40 to thereby generate thrust. A plurality of communication passages 43A are formed in the armature 43 so that the liquid oil in the solenoid actuator 33 does not act as flow passage resistance with respect to displacement of the armature 43. An outer-diameter dimension of the armature 43 is set to a value slightly smaller than an inner-diameter dimension of the first tube portion 42B of the tube 42 so as to allow displacement of the armature 43 in the axial direction inside the tube 42.

The actuation pin 44 is provided inside the anchor 40 so as to extend in the axial direction on the inner periphery side of the anchor 40. The actuation pin 44 is supported by the anchor 40 through intermediation of the bush 45 in such a manner as to be displaceable in the axial direction. Another end surface (a right end surface in Fig. 2 and Fig. 3, an upper end surface in Fig. 4) of the actuation pin 44 in the axial direction is in abutment against one end surface (a left end surface in Fig. 2 and Fig. 3, a lower end surface in Fig. 4) of the armature 43 in the axial direction. That is, the actuation pin 44 and the armature 43 are not integrally coupled (fixed). The actuation pin 44 is displaced integrally with the armature 43 based on the abutment against the armature 43 to thereby transmit the thrust of the armature 43 to the pilot valve element 32. A communication passage 44A, which penetrates the actuation pin 44 in the axial direction, is formed in the actuation pin 44 on its inner periphery side.

One end (a left end in Fig. 2 and Fig. 3, a lower end in Fig. 4) of the actuation pin 44 projects from the anchor 40, and the pilot valve element 32 of the damping force adjustment valve 18 is fixed to the projecting end. Thus, the pilot valve element 32 is moved (displaced) integrally with the actuation pin 44 along with the displacement of the armature 43. That is, a valve opening degree or a valve opening pressure of the pilot valve element 32 corresponds to the thrust of the armature 43 based on the energization of the coil 39. Thus, the armature 43 can open and close the pilot valve of the damping force adjustment valve 18, that is, the pilot valve element 32 with respect to the valve seat portion 26E of the pilot body 26 through its own movement in the axial direction.

The bush 45 is positioned on an inner periphery side of the anchor 40 and is provided in the bush fitting hole 40D. The bush 45 supports the actuation pin 44 as a bearing for the actuation pin 44 with respect to the anchor 40. The actuation pin 44 is guided by the bush 45 so as to be displaceable in the axial direction.

According to Patent Literature 1 described above, in addition to the need for two bushes (bearing members) for supporting the shaft portion, the movable core (movable element) and the shaft portion are joined (coupled) together. Thus, in order to suppress the inclination of the movable core (movable element) and suppress hysteresis, the coaxiality of four components including the two bushes (bearing members), the movable core (movable element), and the shaft portion and dimensional tolerances thereof are required to be regulated with high accuracy. As a result, productivity may be lowered, and processing costs (manufacturing costs) may be increased. Thus, in the first embodiment, the armature and the actuation pin (rod) are formed separately (non-integrally), and one bush (bearing member) is provided so as to support the actuation pin (rod). In this manner, the number of components is reduced, shapes are simplified, and accuracy for tolerances is relaxed. Thus, hysteresis is suppressed while costs are reduced. This aspect is described below in detail.

First, as illustrated in Fig. 1, the shock absorber 1 includes: the inner tube 4 and the outer tube 2 as a cylinder; the piston 5; the piston rod 8; the annular oil chamber D serving as a flow passage (more specifically, a flow passage between the annular oil chamber D and the reservoir chamber A); and the damping force adjustment valve 18 (the pilot valve element 32, and also the main valve 23). The damping force adjustment valve 18 (the pilot valve element 32, and also the main valve 23) is provided in the flow passage (that is, between the annular oil chamber D and the reservoir chamber A) in which flow of the hydraulic fluid or working fluid is generated by the extension and retraction of the piston rod 8. The damping force adjustment valve 18 (the pilot valve element 32, and also the main valve 23) is driven (its valve opening pressure is adjusted) by the solenoid actuator 33.

Further, as illustrated in Fig. 2 and Fig. 3, the damping force adjustment mechanism 17 includes: the damping force adjustment valve 18 (more specifically, the pilot valve element 32, and also the main valve 23) serving as a control valve; and the solenoid actuator 33. The damping force adjustment valve 18 (the pilot valve element 32, and also the main valve 23) is controlled by the movement of the armature 43 in the axial direction, which is in abutment against the actuation pin 44. The damping force adjustment mechanism 17 corresponds to an electromagnetic valve having a valve mechanism (pilot valve element 32). In this case, the electromagnetic valve includes: the solenoid actuator 33; and the return spring 28 corresponding to an elastic member.

As illustrated in Fig. 4, the solenoid actuator 33 includes: the coil 39; the tubular core 41 and the tube 42, which correspond to a stator; and the armature 43 corresponding to a movable element. Further, the solenoid actuator 33 includes, in addition to the coil 39, the tubular core 41, the tube 42, and the armature 43: the actuation pin 44 corresponding to a driven member; and one bush 45 corresponding to a bearing member.

The coil 39 has a cylindrical shape. The coil 39 is wound around the bobbin 38 having a cylindrical shape. The tubular core 41 is fixed to another side (a right side in Fig. 2 and Fig. 3, an upper side in Fig. 4, a side opposite to the anchor 40) of the bobbin 38 in the axial direction on the inner periphery side of the bobbin 38. The anchor 40 is arranged on one side (a left side in Fig. 2 and Fig. 3, a lower side in Fig. 4, a side opposite to the tubular core 41) of the bobbin 38 in the axial direction on the inner periphery side of the bobbin 38 with a predetermined gap (gap in the axial direction) from the tubular core 41. The tube 42 is arranged on an inner periphery side of the tubular core 41, the outer periphery side of the armature 43, and the outer periphery side of the anchor 40.

The tubular core 41 and the tube 42 are fixed on an inner peripheral surface of the coil 39. The armature 43 is movable in the axial direction along an inner peripheral surface of the tube 42 and an inner peripheral surface of the anchor 40. That is, the armature 43 is movable to one side in the axial direction (the left side in Fig. 2 and Fig. 3, the lower side in Fig. 4, the anchor 40 side) on the inner peripheral surface of the tube 42 in accordance with a current applied to the coil 39. The actuation pin 44 is in abutment against the armature 43 in the axial direction. The actuation pin 44 actuates the pilot valve element 32 serving as a valve mechanism when being driven in the axial direction. The actuation pin 44 is a driven member that is non-integrated with the armature 43. That is, the armature 43 is simply in abutment against the actuation pin 44 and is not integrally coupled (fastened, fixed) (is noncoupled, non-fastened, non-fixed) therewith. The actuation pin 44 is moved by the armature 43 that is in abutment against itself in the axial direction.

The bush 45 guides the actuation pin 44 in the axial direction. The return spring 28 biases the actuation pin 44 to another side (the right side in Fig. 2 and Fig. 3, the upper side in Fig. 4, the armature 43 side) in the axial direction. The return spring 28 applies a force in a direction of bringing the actuation pin 44 into abutment against the armature 43 to the actuation pin 44. Thus, even when the actuation pin 44 and the armature 43 are non-integrated, in other words, the actuation pin 44 and the armature 43 are not coupled (rigid-connected), a static frictional force between contact surfaces of the actuation pin 44 and the armature 43 can be increased based on the thrust of the armature 43 and a spring force of the return spring 28. As a result, axial misalignment between the actuation pin 44 and the armature 43 can be suppressed.

The solenoid actuator 33 constitutes, together with the pilot valve element 32, a solenoid valve (pressure control valve) corresponding to an electromagnetic valve. As indicated by the arrows M in Fig. 3, when a current is caused to flow through the coil 39, magnetic flux is generated by the solenoid actuator 33 and passes through a magnetic circuit including the armature 43, the anchor 40, the tubular case 36, and the tubular core 41. Thus, the armature 43 is attracted to the anchor 40. This results in the thrust of the armature 43, and the opening and closing of the pilot valve element 32 are controlled.

As illustrated in Fig. 4, in the first embodiment, the armature 43 is movable to the one side in the axial direction with a first gap S1 with respect to the inner peripheral surface of the tube 42. Meanwhile, the bush 45 guides the actuation pin 44 in the axial direction with a second gap S2, which is smaller than the first gap S1, with respect to an outer peripheral surface of the actuation pin 44. That is, the second gap S2, which is a gap between an inner peripheral surface of the bush 45 and the outer peripheral surface of the actuation pin 44, is smaller than the first gap S1, which is a gap between an inner peripheral surface of the first tube portion 42B of the tube 42 and an outer peripheral surface of the armature 43 (the first gap S1> the second gap S2). In this case, it is preferred that the first gap S1 be set closer to the second gap S2. That is, it is preferred that a difference between the first gap S1 and the second gap S2 be reduced. A bearing function can be provided to the armature 43 by reducing the difference between the first gap S1 and the second gap S2 as described above. The armature 43 described above can be manufactured through, for example, a forging process or a cutting process.

Further, the actuation pin 44 is in surface contact with the armature 43 in a plane. That is, another end surface (a right end surface in Fig. 2 and Fig. 3, an upper end surface in Fig. 4, an end surface on the armature 43 side) of the actuation pin 44 in the axial direction is a flat surface orthogonal to a center axis of the actuation pin 44. Further, one end surface (a left end surface in Fig. 2 and Fig. 3, a lower end surface in Fig. 4, an end surface on the actuation pin 44 side) of the actuation pin 44 in the axial direction is a flat surface orthogonal to the center axis of the armature 43. The another end surface of the actuation pin 44 in the axial direction and the one end surface of the armature 43 in the axial direction are in surface contact with each other.

Further, an outer diameter of the armature 43 is represented by "d", an outer diameter of the actuation pin 44 is represented by d1, and an inner diameter of the actuation pin 44 is represented by d2. In this case, the outer diameter d1 of the actuation pin 44 is set to one-fifth or more of the outer diameter "d" of the armature 43 (d1≥"d"×1/5). Further, the inner diameter d2 of the actuation pin 44 is set to one-half or less of the outer diameter d1 of the actuation pin 44 (d2≤d1×1/2). In this manner, a contact area between the actuation pin 44 and the armature 43 is ensured. Further, the actuation pin 44 is formed in a simple (uncomplicated) bar shape.

The solenoid actuator 33, the damping force adjustment mechanism 17, and the shock absorber 1 according to the first embodiment have the configurations described above. Next, actuation thereof is described.

First, when the shock absorber 1 is mounted in a vehicle such as an automobile, an upper end (projecting end) of the piston rod 8 is mounted to a vehicle body side of the vehicle and the mounting eye 3A provided to the bottom cap 3 is mounted to a wheel side. Further, the cable 35 of the solenoid actuator 33 is connected to a controller (control device) or the like, which is provided on the vehicle body side of the vehicle.

When oscillation in the up-and-down direction occurs due to irregularities of a road surface or the like while the vehicle is running, the piston rod 8 is displaced to be extended from and retracted into the outer tube 2. A damping force can be generated by the damping force adjustment mechanism 17 or the like, and the oscillation of the vehicle can be eased. At this time, the current value to the coil 39 of the solenoid actuator 33 is controlled by the controller to adjust the opening degree (valve opening pressure) of the pilot valve element 32. In this manner, the damping force generated by the shock absorber 1 (damping force adjustment valve 18) can be variably adjusted.

For example, during the extension stroke of the piston rod 8, the check valve 7 on the retraction side of the piston 5 is closed as a result of the movement of the piston 5 inside the inner tube 4. Before the disc valve 6 of the piston 5 is opened, the liquid oil in the rod-side oil chamber B is pressurized and flows into the oil passage 20B of the connection pipe body 20 of the damping force adjustment valve 18 through the oil holes 4A of the inner tube 4, the annular oil chamber D, and the connection port 12C of the intermediate cylinder 12. At this time, the liquid oil corresponding to the movement of the piston 5 opens the extension-side check valve 16 of the bottom valve 13 to flow from the reservoir chamber A into the bottom-side oil chamber C. When a pressure in the rod-side oil chamber B reaches a valve opening pressure of the disc valve 6, the disc valve 6 is opened to relieve the pressure in the rod-side oil chamber B into the bottom-side oil chamber C.

In the damping force adjustment mechanism 17, before the main valve 23 is opened (when a piston speed is in a low speed range), the liquid oil that has flowed into the oil passage 20B of the connection pipe body 20 passes through the center hole 21A of the valve member 21, the center hole 24B of the pilot pin 24, and the center hole 26C of the pilot body 26, forcibly opens the pilot valve element 32, and flows into the inside of the pilot body 26 as indicated by the arrows X in Fig. 2 and Fig. 3. Then, the liquid oil that has flowed into the inside of the pilot body 26 passes through a space between the flange portion 32A of the pilot valve element 32 and the disc valve 29, the oil passage 30A of the holding plate 30, the cutouts 31A of the cap 31, and the oil chamber 19C of the valve case 19 and flows into the reservoir chamber A. When a pressure in the oil passage 20B of the connection pipe body 20, that is, a pressure in the rod-side oil chamber B increases and reaches a valve opening pressure of the main valve 23 along with an increase in piston speed, the liquid oil that has flowed into the oil passage 20B of the connection pipe body 20 passes through the oil passages 21B of the valve member 21, forcibly opens the main valve 23, passes through the oil chamber 19C of the valve case 19, and flows into the reservoir chamber A as indicated by the arrows Y in Fig. 2 and Fig. 3.

Meanwhile, during the retraction stroke of the piston rod 8, the check valve 7 on the retraction side of the piston 5 is opened and the extension-side check valve 16 of the bottom valve 13 is closed as a result of the movement of the piston 5 inside the inner tube 4. Before the bottom valve 13 (disc valve 15) is opened, the liquid oil in the bottom-side oil chamber C flows into the rod-side oil chamber B. Along therewith, the liquid oil corresponding to the retraction of the piston rod 8 into the inner tube 4 flows through the same path as that during the extension stroke from the rod-side oil chamber B via the damping force adjustment valve 18 into the reservoir chamber A. When a pressure in the bottom-side oil chamber C reaches a valve opening pressure of the bottom valve 13 (disc valve 15), the bottom valve 13 (disc valve 15) is opened to relieve the pressure in the bottom-side oil chamber C into the reservoir chamber A.

Thus, during the extension stroke and the retraction stroke of the piston rod 8, before the main valve 23 of the damping force adjustment valve 18 is opened, a damping force is generated by the orifice 24C of the pilot pin 24 and a valve opening pressure of the pilot valve element 32. After the main valve 23 is opened, the damping force is generated in accordance with the opening degree of the main valve 23. In this case, the damping force can be directly controlled regardless of the piston speed by adjusting the valve opening pressure of the pilot valve element 32 through energization of the coil 39 of the solenoid actuator 33.

Specifically, when an energization current through the coil 39 is reduced so as to reduce the thrust of the armature 43, the valve opening pressure of the pilot valve element 32 is reduced to thereby generate a damping force on a soft side. Meanwhile, when the energization current through the coil 39 is increased so as to increase the thrust of the armature 43, the valve opening pressure of the pilot valve element 32 is increased to thereby generate a damping force on a hard side. At this time, the internal pressure of the back-pressure chamber 27 that is in communication through the oil passages 25 on an upstream side thereof changes due to the valve opening pressure of the pilot valve element 32. Thus, the valve opening pressure of the main valve 23 can be adjusted at the same time by controlling the valve opening pressure of the pilot valve element 32, and hence an adjustment range of a damping force characteristic can be enlarged.

When the thrust of the armature 43 is lost due to disconnection of the coil 39 or the like, the pilot valve element 32 is retreated (displaced in a direction away from the valve seat portion 26E) by the return spring 28 to thereby bring the flange portion 32A of the pilot valve element 32 into abutment against the disc valve 29. Thus, the damping force can be generated by the valve opening pressure of the disc valve 29, and hence a required damping force can be obtained even in case of malfunction such as coil disconnection.

Here, according to the first embodiment, the second gap S2 between the outer peripheral surface of the actuation pin 44 and the bush 45 is set smaller than the first gap S1 between the inner peripheral surface of the tube 42 (first tube portion 42B) and the armature 43. Thus, inclination of the actuation pin 44 can be suppressed by the bush 45, and inclination of the armature 43 that is in abutment against the actuation pin 44 in the axial direction can also be suppressed. That is, the actuation pin 44 is supported straight by the bush 45 being a tight fit bearing, while the armature 43 is held straight based on the spring force of the return spring 28 and the thrust of the armature 43. As a result, the inclination of the armature 43 can be suppressed with one bush 45. As described above, the inclination of the armature 43 can be suppressed without regulating the coaxiality of four components (two bushes, an armature, and an actuation pin) and dimensional tolerances thereof with high accuracy, as required in the related art. That is, the number of bushes (bearings) can be reduced, and the armature 43 and the actuation pin 44 are not coupled together. Thus, the structure can be simplified (made simple). In addition, required accuracy of the dimensional tolerances and the coaxiality can be reduced. As a result, the suppression of hysteresis and a reduction in processing costs (manufacturing costs) can be both achieved. In addition, when the armature 43 is manufactured through a forging process, productivity can be improved.

According to the first embodiment, the actuation pin 44 is in surface contact with the armature 43 in a plane. Thus, the inclination of the armature 43 can be suppressed based on the surface contact between the actuation pin 44 and the armature 43 in a plane. In this case, abutment surfaces of the actuation pin 44 and the armature 43 are planar. Thus, shapes of the actuation pin 44 and the armature 43 can be simplified (made simple). In addition, the outer diameter d1 of the actuation pin 44 can be set to one-fifth or more of the outer diameter "d" of the armature 43, and the inner diameter d2 of the actuation pin 44 is set to one-half or less of the outer diameter d1 of the actuation pin 44. Thus, the contact area between the actuation pin 44 and the armature 43 can be increased. Also in this aspect, the inclination of the armature 43 can be suppressed.

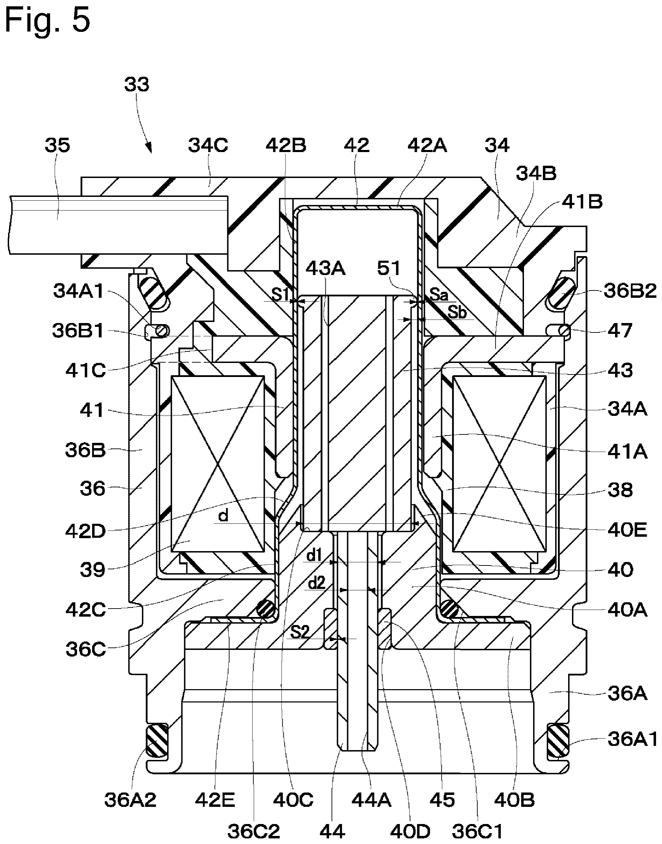

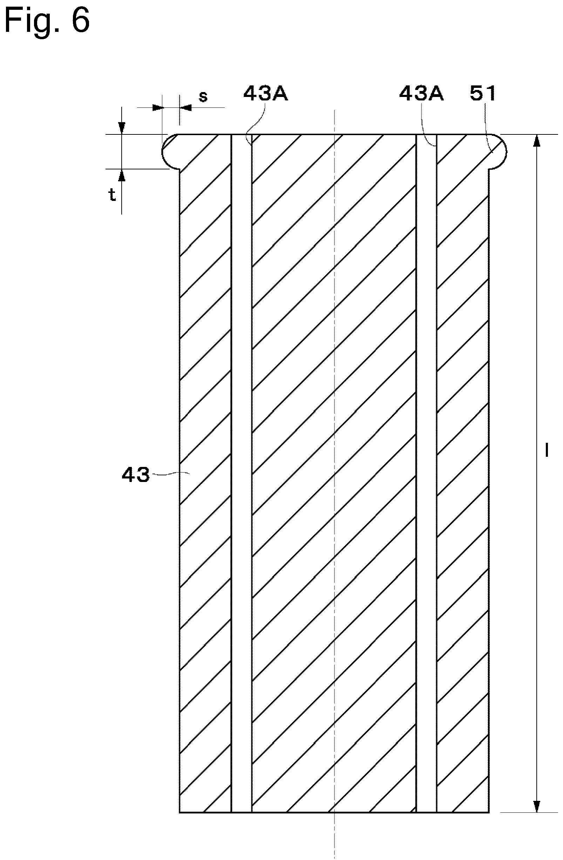

Next, in Fig. 5 and Fig. 6, a second embodiment is illustrated. A feature of the second embodiment lies in a configuration in which a flange portion is formed on a movable element. In the second embodiment, the same constituent elements as those of the first embodiment described above are denoted by the same reference symbols, and description thereof is omitted.

As illustrated in Fig. 5 and Fig. 6, in the second embodiment, an armature 43 has a portion that defines a gap between its outer peripheral surface in a circumferential direction and a tube 42 (first tube portion 42B), which is smaller than a gap defined by a remaining portion, and is contactable with the tube 42 (first tube portion 42B). That is, the gap in a radial direction defined between the tube 42 (first tube portion 42B) and the armature 43 includes: a small gap Sa, which is small in size; and a large gap Sb, which is larger in size than the small gap Sa, which are arranged in an axial direction. Thus, the armature 43 has a flange portion 51 being a portion of the outer peripheral surface in the circumferential direction, which relatively projects in a direction orthogonal to an axial direction relative to a remaining portion. The flange portion 51 corresponds to a portion of the armature 43, which has a larger radial dimension (thick portion) than that of the remaining portion, and the remaining portion of the armature 43 corresponds to a portion having a smaller radial dimension (thin portion) than that of the flange portion 51. The flange portion 51 is a portion that defines a smaller gap with respect to an inner peripheral surface of the tube 42 (first tube portion 42B) than a gap defined by the remaining portion. The flange portion 51 is contactable with the inner peripheral surface of the tube 42 (first tube portion 42B). Meanwhile, it is preferred that the remaining portion of the outer peripheral surface of the armature 43 other than the flange portion 51 be formed so as not to be brought into contact with the inner peripheral surface of the tube 42 (first tube portion 42B). As described above, the armature 43 has the flange portion 51 being a portion in the axial direction, which projects in the radial direction with respect to the remaining portion. As a result, a portion of the armature 43, that is, the flange portion 51 defines the small gap Sa at a position at which the flange portion 51 is opposed to the tube 42 (first tube portion 42B). Meanwhile, the remaining portion of the armature 43 defines the large gap Sb at a position at which the remaining portion is opposed to the tube 42 (first tube portion 42B).

Here, the flange portion 51 is a curved protruding portion having an arc-like (semicircular) cross section, which projects to a radially outer side of the armature 43 over the entire circumference. The flange portion 51 is formed on a most distal end side (another end side, an upper end side in Fig. 5 and Fig. 6, a side opposite to the actuation pin 44) of the armature 43. When one flange portion 51 is formed on the outer peripheral surface of the armature 43, it is preferred that a position of the flange portion 51 be set as follows. For example, when an axial dimension of the armature 43 is represented by "1", it is preferred that the flange portion 51 be formed within a range of "1/4" from a distal end surface (upper end surface in Fig. 5 and Fig. 6) of the armature 43. When a width dimension of the flange portion 51 is represented by "t", it is preferred that the width dimension "t" of the flange portion 51 be set to "1/2" or less. Further, when a projecting dimension of the flange portion 51 is represented by "s", it is preferred that the projecting dimension "s" of the flange portion 51 be set to "t/4" or less. When it is assumed that, for example, "t=1", "s" can be set equal to 0.25. The armature 43 with the flange portion 51 described above can be manufactured through, for example, a forging process or a cutting process.

Further, in the second embodiment, as in the first embodiment, the armature 43 is movable to one side in the axial direction (lower side in Fig. 5 and Fig. 6) with a first gap S1 with respect to the inner peripheral surface of the tube 42 (first tube portion 42B). Meanwhile, a bush 45 guides the actuation pin 44 in the axial direction with a second gap S2, which is smaller than the first gap S1, with respect to an outer peripheral surface of the actuation pin 44. The actuation pin 44 is in surface contact with the armature 43 in a plane.

In the second embodiment, the flange portion 51 as described above is formed on the armature 43. The basic functions of the second embodiment are not significantly different from those of the first embodiment described above. That is, as in the first embodiment, the suppression of hysteresis and a reduction in processing costs (manufacturing costs) can be both achieved in the second embodiment. In the second embodiment, in particular, the armature 43 has the flange portion 51 being a portion that defines the gap between the outer peripheral surface in the circumferential direction and the tube 42 (first tube portion 42B), which is smaller than the gap defined by the remaining portion, and is contactable with the tube 42 (first tube portion 42B). Thus, the flange portion 51 is allowed to function as a bearing for the armature 43 with respect to the tube 42 (first tube portion 42B). Accordingly, the inclination of the armature 43 can be suppressed without regulating the coaxiality of four components (two bushes, an armature, and an actuation pin) and the dimensional tolerances thereof with high accuracy, as required in the related art. As a result, the suppression of hysteresis and a reduction in processing costs (manufacturing costs) can be both achieved.

Specifically, in the second embodiment, when the flange portion 51 is formed on the armature 43, the posture of the armature 43 during movement (sliding movement) can be maintained by the flange portion 51. Thus, hysteresis can be suppressed. Further, the number of bushes (bearings) can be reduced, and the armature 43 and the actuation pin 44 are not coupled together. Thus, the structure can be simplified (made simple). In addition, the accuracy of the dimensional tolerances and the coaxiality can be reduced. As a result, the suppression of hysteresis and a reduction in processing costs (manufacturing costs) can be both achieved. In addition, when the armature 43 is manufactured through a forging process, productivity can be improved.

In other words, the armature 43 functions as a bearing owing to the presence of the flange portion 51 and is operated integrally with the actuation pin 44 and the pilot valve element 32. That is, the armature 43 has a function as a second bearing and functions as a guide for operating integrally with the actuation pin 44 and the pilot valve element 32. At this time, even when the actuation pin 44 and the armature 43 are non-integrated (that is, even when the actuation pin 44 and the armature 43 are not coupled together), a static frictional force between a contact surface of the actuation pin 44 and a contact surface of the armature 43 increases based on thrust of the armature 43 and a spring force of a return spring 28. Thus, axial misalignment between the actuation pin 44 and the armature 43 is suppressed. The armature 43 is manufactured through, for example, a forging process or a cutting process. However, a manufacturing method for the armature 43 is not limited to any particular method. For example, the flange portion 51 and the remaining portion may be formed by setting a tolerance range to a positive region and to a zero to negative region with respect to a reference. The portion of the outer peripheral surface of the armature 43 other than the flange portion 51 may be formed rougher than the flange portion 51.

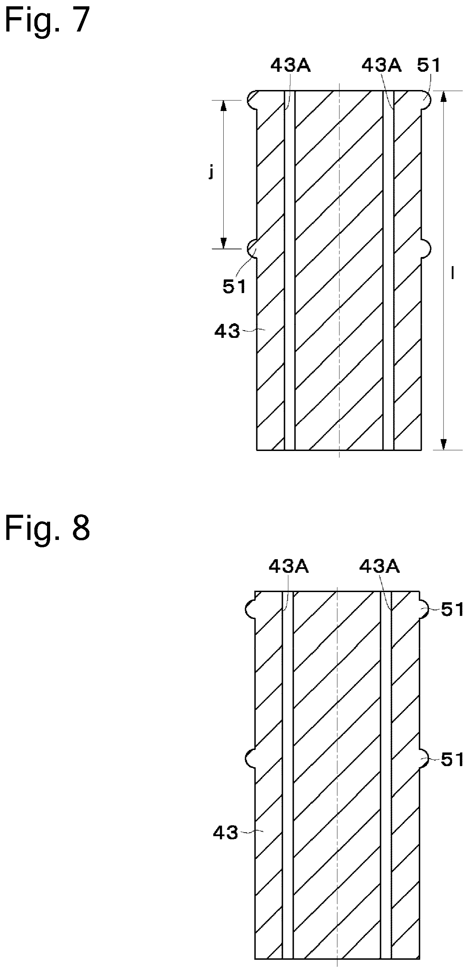

In the second embodiment, one flange portion 51 formed on the outer periphery side of the armature 43 has been described by way of example. However, the flange portion 51 is not limited thereto. For example, as in a first modification example illustrated in Fig. 7 and a second modification example illustrated in Fig. 8, two flange portions 51 may be formed on the outer periphery side of the armature 43. Further, although not shown, three or more flange portions may be formed on the outer periphery side of the armature. That is, a plurality of flange portions 51 may be formed in such a manner as to be spaced apart from each other in the axial direction of the armature 43.

Now, according to the first modification example illustrated in Fig. 7, flange portions 51 are formed at two positions, i.e., on a distal end side (upper end side in Fig. 7) and an intermediate portion of an armature 43. When two flange portions 51 are formed on an outer peripheral surface of the armature 43 as described above, it is preferred that the positions of the flange portions 51 be set as follows. That is, when an axial dimension of the armature 43 is represented by "1", it is preferred that the flange portion 51 on the distal end side (upper end side in Fig. 7) of the armature 43 be formed so as to fall within a range of "1/2" from a distal end surface of the armature 43. Further, it is preferred that an axial distance "j" between the flange portion 51 on the distal end side (upper end side in Fig. 7) of the armature 43 and the flange portion 51 on the intermediate portion be set to "1/2" or more. Further, as in the second modification example illustrated in Fig. 8, a flange portion 51 on a distal end side (upper end side in Fig. 8) of an armature 43 may be formed at a position away from a distal end surface toward a proximal end side (a lower end side in Fig. 8, an actuation pin 44 side).

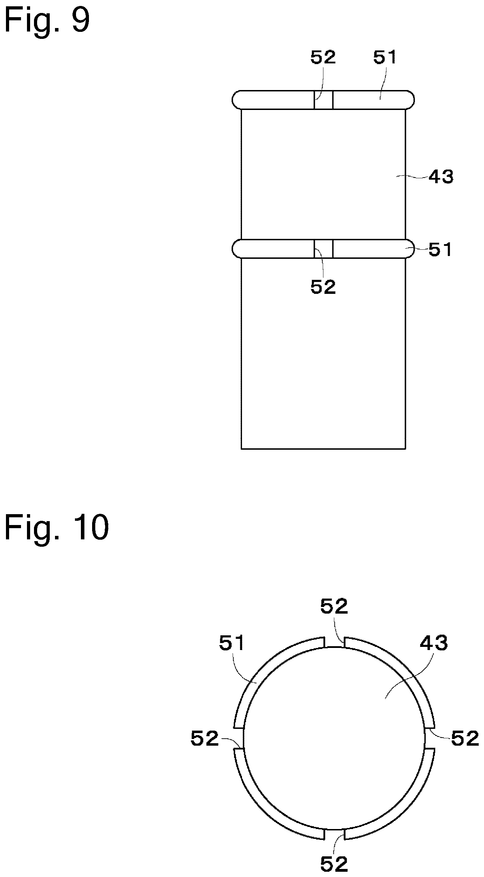

In the first modification example illustrated in Fig. 7, the armature 43 having a plurality of communication passages 43A extending in the axial direction formed therein has been described by way of example. However, the communication passages are not limited thereto. For example, as in a third modification example illustrated in Fig. 9 and Fig. 10, communication passages 52 may be formed in the flange portion 51. Specifically, according to the third modification example, the communication passages 52 each having a groove-like shape, which are recessed radially inward and extend in the axial direction, are formed in the flange portion 51. A plurality of (for example, four) communication passages 52 are formed in such a manner as to be spaced apart from each other in a circumferential direction of the flange portion 51. When the communication passages 52 are formed in the flange portion 51 as described above, communication passages are not required to be formed in the armature 43. The same applies to the second embodiment and the second modification example.

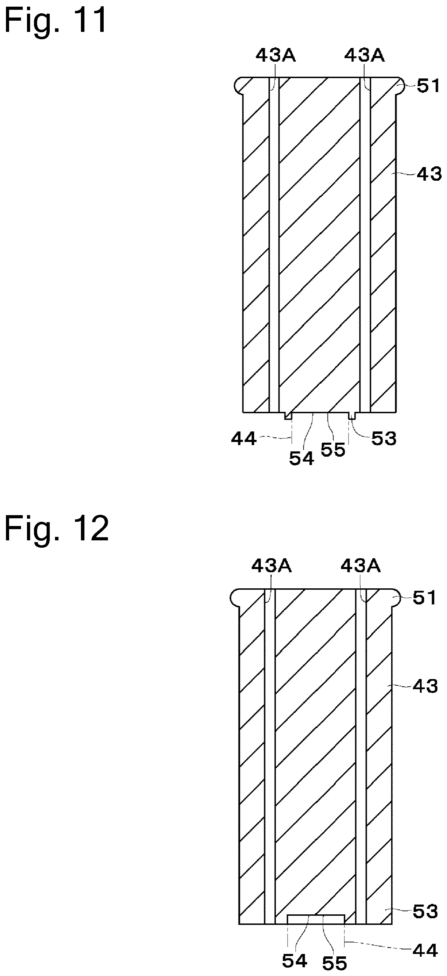

In the second embodiment, the armature 43 having the proximal end surface (the one end surface, the lower end surface in Fig. 5 and Fig. 6, the end surface on the actuation pin 44 side) being a flat surface has been described by way of example. However, the proximal end surface is not limited thereto. For example, as in a fourth modification example illustrated in Fig. 11 and a fifth modification example illustrated in Fig. 12, a protruding portion 53 may be formed on a proximal end surface (one end surface, a lower end surface in Fig. 11, an end surface on the actuation pin 44 side) of an armature 43 in such a manner as to surround a region against which an actuation pin 44 is in abutment.

That is, according to the fourth modification example illustrated in Fig. 11 and the fifth modification example illustrated in Fig. 12, the armature 43 has the protruding portion 53 that surrounds an abutment surface 54 which is in abutment against the actuation pin 44. The protruding portion 53 covers another end portion (upper end portion in Fig. 11 and Fig. 12) of the actuation pin 44 over the entire circumference. In this case, an inner peripheral surface (inner wall surface) of the protruding portion 53 having an annular shape is in abutment against an outer peripheral surface of the another end portion of the actuation pin 44. Here, in the fifth modification example illustrated in Fig. 12, an outer peripheral surface of the armature 43 includes an outer peripheral surface (outer wall surface) of the protruding portion 53 having an annular shape. That is, according to the fifth modification example illustrated in Fig. 12, an abutment surface 54 of the armature 43, against which the actuation pin 44 is in abutment, is a bottom surface of a recessed portion 55. Also in the fourth modification example illustrated in Fig. 11, when a projecting surface (protruding surface) of the protruding portion 53 is defined as a reference surface, an abutment surface 54 which is in abutment against the actuation pin 44 is a bottom surface of a recessed portion 55.

According to the fourth modification example and the fifth modification example described above, a shift of an abutment position (contact position) between the actuation pin 44 and the armature 43 in the radial direction can be prevented by the protruding portion 53. In other words, a shift of the abutment position (contact position) between the actuation pin 44 and the armature 43 in the radial direction can be prevented by the recessed portion 55. The same applies to the first embodiment, the first modification example, the second modification example, and the third modification example.

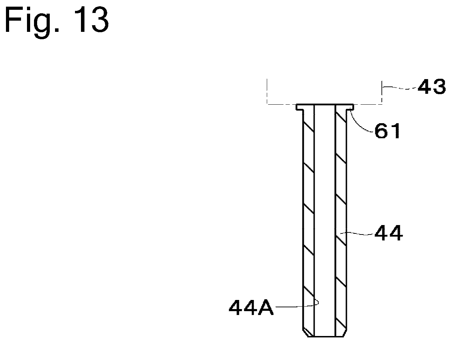

In the first embodiment, the actuation pin 44 having a straight outer peripheral surface has been described by way of example. However, the actuation pin is not limited thereto. For example, as in a sixth modification example illustrated in Fig. 13, a flange portion 61, which is in abutment against an armature 43, may be formed on a distal end side (another end side, an upper end side in Fig. 13, the armature 43 side) of an actuation pin 44. The flange portion 61 projects radially outward from an outer peripheral surface of the actuation pin 44 over the entire circumference. According to the sixth modification example described above, a portion of the actuation pin 44, which is in surface contact with the armature 43, has a diameter larger than that of the remaining portion. Thus, a contact area between the actuation pin 44 and the armature 43 can be increased. As a result, also in this aspect, the inclination of the armature 43 can be suppressed. The same applies to the second embodiment, the first modification example, the second modification example, the third modification example, the fourth modification example, and the fifth modification example.

As described above, according to the first embodiment (Fig. 4) and the second embodiment (Fig. 5), the armature 43 is contactable with the tube 42 (first tube portion 42B). Thus, the armature 43 slides directly on the inner surface of the tube 42 (first tube portion 42B). As a result, the armature 43 itself functions as a bearing, and hence a bush (bearing member) for supporting the armature 43 can be omitted.

Further, in the second embodiment (Fig. 5 and Fig. 6), the armature 43 has the flange portion 51 on one portion in the axial direction, which projects in the radial direction with respect to the remaining portion. Further, in the first modification example (Fig. 7), the armature 43 has two flange portions 51. A portion of the armature 43, that is, the flange portion 51 defines the small gap Sa between itself and the tube 42 (first tube portion 42B), and the remaining portion of the armature 43 defines the large gap Sb between itself and the tube 42 (first tube portion 42B). As a result, the gap in the radial direction defined between the tube 42 (first tube portion 42B) and the armature 43 includes: at least one small gap Sa being small in size; and at least one large gap Sb being larger in size than the small gap Sa, which are arranged in the axial direction. In other words, two or more gaps having different sizes in the radial direction are arranged in the axial direction between the tube 42 (first tube portion 42B) and the armature 43. Thus, axial misalignment of the armature 43 with respect to the tube 42 (first tube portion 42B) can be reduced by the portion defining the small gap Sa, that is, the flange portion 51. Accordingly, a magnetic side force can be reduced, and hence a frictional force applied to the armature 43 can be reduced. Further, forging can be introduced into processing of the armature 43, and hence processing costs are reduced. As a result, hysteresis can be improved, and costs can be reduced.

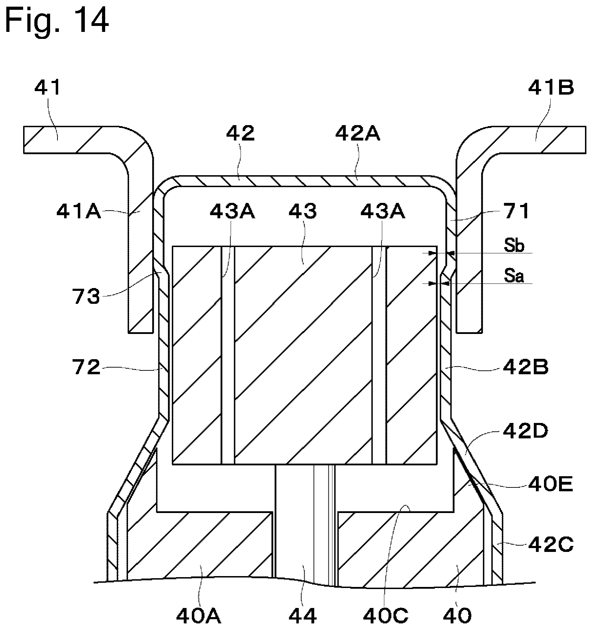

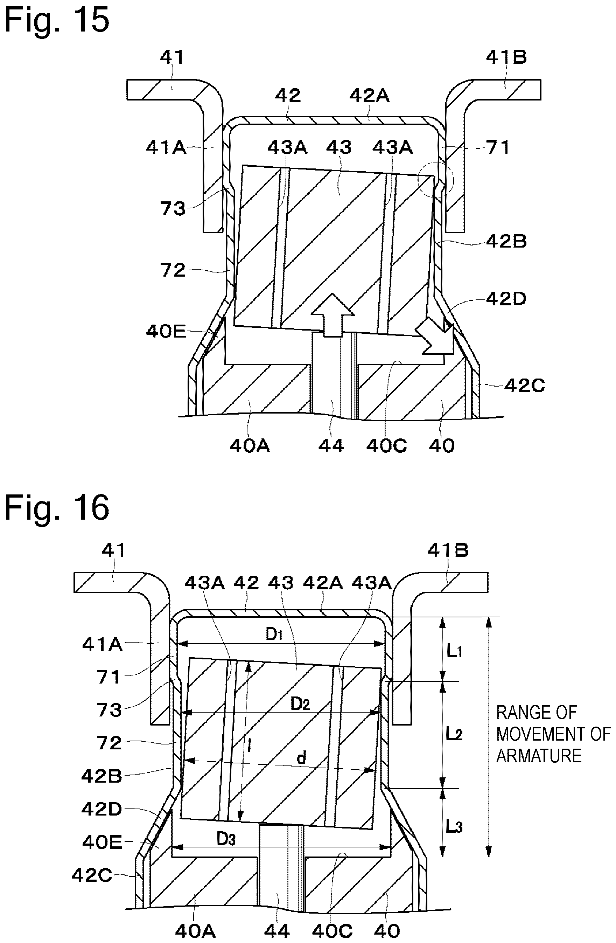

Next, in Fig. 14 and Fig. 16, a third embodiment is illustrated. A feature of the third embodiment lies in a configuration in which a guide tube includes a large-diameter portion and a small-diameter portion as a stator. In the third embodiment, the same constituent elements as those of the first embodiment and the second embodiment described above are denoted by the same reference symbols, and description thereof is omitted.

In the second embodiment (Fig. 5 and Fig. 6) and the first modification example (Fig. 7) described above, the flange portion 51 that projects in the radial direction with respect to the remaining portion is formed on one portion of the armature 43 in the circumferential direction. In this manner, at least one small gap Sa and at least one large gap Sb are defined between the tube 42 (first tube portion 42B) and the armature 43. Meanwhile, in the third embodiment illustrated in Fig. 14 to Fig. 16, a tube 42 (first tube portion 42B) is formed to have a large-diameter portion 71 and a small-diameter portion 72 to thereby define a small gap Sa and a large gap Sb between the tube 42 (first tube portion 42B) and an armature 43. Although not shown, a plurality of small gaps and a plurality of large gaps may be defined by forming a plurality of large-diameter portions. That is, at least one small gap Sa and at least one large gap Sb can be defined between the tube 42 (first tube portion 42B) and the armature 43.

As illustrated in Fig. 14 to Fig. 16, in the third embodiment, as in the second embodiment illustrated in Fig. 5 and Fig. 6, a solenoid actuator 33 includes: a coil 39 having a cylindrical shape (see Fig. 5); a tubular core 41, a tube 42, and an anchor 40, which correspond to a stator to be fixed to an inner peripheral surface (inner side) of the coil 39; and an armature 43 corresponding to a movable element, which is movable toward one side in the axial direction (lower side in Fig. 14 to Fig. 16) on an inner peripheral surface of the tube 42 in accordance with a current applied to the coil 39. The armature 43 is contactable with the tube 42 (more specifically, a first tube portion 42B). A gap defined between the tube 42 (first tube portion 42B) and the armature 43 includes: at least one small gap Sa being small in size in the radial direction; and at least one large gap Sb being larger in size in the radial direction than the small gap Sa, which are arranged in the axial direction.

Here, according to the second embodiment illustrated in Fig. 5 and Fig. 6, the armature 43 has the flange portion 51 on one portion in the axial direction, which projects in the radial direction with respect to the remaining portion. A portion of the armature 43, that is, the flange portion 51 defines the small gap Sa at a position at which the flange portion 51 is opposed to the tube 42 (first tube portion 42B), and the remaining portion of the armature 43 defines the large gap Sb at a position at which the remaining portion is opposed to the tube 42 (first tube portion 42B).

Meanwhile, according to the third embodiment illustrated in Fig. 14 to Fig. 16, the armature 43 is free of the flange portion 51. That is, as in the first embodiment (Fig. 4), an outer peripheral surface of the armature 43 is a circumferential surface having the same outer-diameter dimension in the axial direction. Besides, according to the third embodiment illustrated in Fig. 14 to Fig. 16, the tube 42 corresponding to a guide tube has the large-diameter portion 71 and the small-diameter portion 72. That is, the stator of the solenoid actuator 33 includes the tube 42 having a bottomed tubular shape that guides movement of the armature 43, which is a movable element, on its inner peripheral surface. As in the first embodiment (Fig. 4) and the second embodiment (Fig. 5), the tube 42 of the third embodiment also includes a bottom portion 42A, a first tube portion 42B, a second tube portion 42C, and a tapered portion 42D. In addition, in the third embodiment, as illustrated in Fig. 14 to Fig. 16, the first tube portion 42B of the tube 42 has the large-diameter portion 71 and the small-diameter portion 72.

The large-diameter portion 71 extends from the bottom portion 42A side toward one side in the axial direction (lower side in Fig. 14 to Fig. 16) and defines the large gap Sb between itself and the armature 43. The small-diameter portion 72 is indirectly continuous with the large-diameter portion 71 to extend toward the one side in the axial direction, has an inner diameter smaller than that of the large-diameter portion 71, and defines the small gap Sa between itself and the armature 43. In this case, in order to achieve indirect continuity between the small-diameter portion 72 and the large-diameter portion 71, the first tube portion 42B of the tube 42 has an inclined connecting portion 73 as a connecting portion having an inner diameter continuously decreasing from the large-diameter portion 71 toward the small-diameter portion 72 to connect the large-diameter portion 71 and the small-diameter portion 72 to each other.

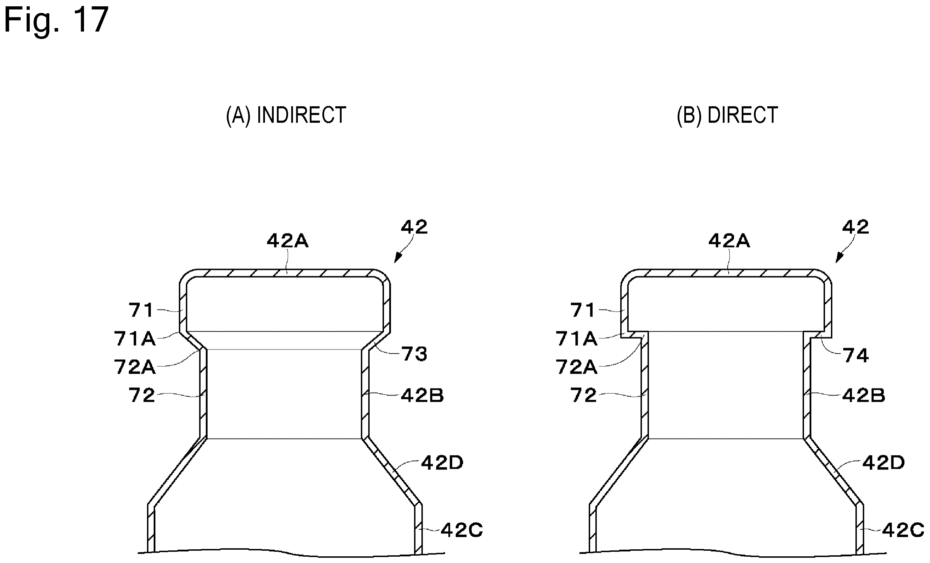

In the third embodiment, as illustrated in part (A) of Fig. 17, the large-diameter portion 71 and the small-diameter portion 72 are connected through the inclined connecting portion 73 having the inner diameter continuously decreasing from the large-diameter portion 71 toward the small-diameter portion 72 so that the small-diameter portion 72 and the large-diameter portion 71 are indirectly (interruptedly) continuous with each other in the axial direction. That is, an end edge 71A of the large-diameter portion 71 on one side (lower side) in the axial direction and an end edge 72A of the small-diameter portion 72 on another side (upper side) in the axial direction are spaced apart from each other in the axial direction (up-and-down direction in Fig. 17) by the inclined connecting portion 73.

Meanwhile, as in a seventh modification example illustrated in part (B) of Fig. 17, in order to achieve direct continuity between a small-diameter portion 72 and a large-diameter portion 71, a first tube portion 42B of a tube 42 may have a level-difference connecting portion 74 that extends in the radial direction between the large-diameter portion 71 and the small-diameter portion 72. The level-difference connecting portion 74 extends in a direction orthogonal to an axial direction of a tube 42 (first tube portion 42B) between an end edge 71A of the large-diameter portion 71 on one side (lower side) in the axial direction and an end edge 72A of the small-diameter portion 72 on another side (upper side) in the axial direction. In this manner, the end edge 71A of the large-diameter portion 71 on the one side (lower side) in the axial direction and the end edge 72A of the small-diameter portion 72 on the another side (upper side) in the axial direction may be matched with each other in the axial direction (up-and-down direction in Fig. 17) by the level-difference connecting portion 74.

In Fig. 16, a dimensional relationship among the armature 43, the tube 42, and the anchor 40 is illustrated. In Fig. 16, "1" represents a length of the armature 43 in the axial direction, "d" represents an outer diameter of the armature 43, "$L_1$" represents a length of the large-diameter portion 71 (and the inclined connecting portion 73) of the tube 42 in the axial direction, "$D_1$" represents an inner diameter of the large-diameter portion 71, "$L_2$" represents a length of the small-diameter portion 72 in the axial direction, "$D_2$" represents an inner diameter of the small-diameter portion 72, "$L_3$" represents a length in the axial direction between the end edge of the small-diameter portion 72 on the one side (lower side) in the axial direction and a bottom surface of a bottomed hole portion 40C of the anchor 40, and "$D_3$" represents an inner diameter of the bottomed hole portion 40C of the anchor 40. A range "$L_1+L_2+L_3$" in Fig. 16 corresponds to a range of movement of the armature 43.

The dimensional relationship among the armature 43, the tube 42, and the anchor 40 is regulated as follows. That is, both the following first condition (A) and second condition (B) are satisfied so that the end edges of the armature 43 on both sides in the axial direction are non-contactable with an inner peripheral surface of the tube 42 (first tube portion 42B) and an inner surface (inner peripheral surface) of the bottomed hole portion 40C of the anchor 40.

The first condition (A) is a condition under which neither the end edge of the armature 43 on the another side (upper side in Fig. 14 to Fig. 16) in the axial direction nor the end edge thereof on the one side (lower side in Fig. 14 to Fig. 16) in the axial direction passes through the small-diameter portion 72. This is a condition under which neither the end edge of the armature 43 on the another side (upper side in Fig. 14 to Fig. 16) in the axial direction nor the end edge thereof on the one side (lower side in Fig. 14 to Fig. 16) in the axial direction is contactable with an inner peripheral surface of the small-diameter portion 72. Specifically, the following Expression 1 is required to be satisfied. In the following description, an influence of deformation of the members is disregarded.

$$[\text{Expression 1}]$$

$$1>L_1+L_2 \text{ and } 1>L_2+L_3$$

The second condition (B) is a condition under which the end edges of the armature 43 on both sides in the axial direction are non-contactable with the inner peripheral surface of the tube 42 (first tube portion 42B) and the inner surface (inner peripheral surface) of the bottomed hole portion 40C of the anchor 40. This is a condition under which, even when the armature 43 is inclined, the end edge of the armature 43 on the another side (upper side in Fig. 14 to Fig. 16) in the axial direction is non-contactable with the inner peripheral surface of the large-diameter portion 71 and the end edge on the one side (lower side in Fig. 14 to Fig. 16) in the axial direction is non-contactable with the inner surface (inner peripheral surface) of the bottomed hole portion 40C of the anchor 40 based on the clearances (gaps) in the radial direction between the outer peripheral surface of the armature 43 and the inner peripheral surface of the tube 42 (first tube portion 42B).

In order to achieve non-contact of the end edge of the armature 43 on the another side (upper side in Fig. 14 to Fig. 16) in the axial direction with the inner peripheral surface of the large-diameter portion 71, the following Expression 2 is required to be satisfied.

[Expression 2]

$$D_1 > 2\{(L_1 + L_2)\tan\theta + d\cos\theta\} - D_2$$

In order to achieve non-contact of the end edge of the armature 43 on the one side (lower side in Fig. 14 to Fig. 16) in the axial direction with the inner surface (inner peripheral surface) of the bottomed hole portion 40C of the anchor 40, the following Expression 3 is required to be satisfied.

[Expression 3]

$$D_3 > 2\{(L_2 + L_3)\tan\theta + d\cos\theta\} - D_2$$

The symbol "$\theta$" in Expression 2 and Expression 3 corresponds to a maximum tilt angle that can occur for the armature 43. The value "$\theta$" is expressed by the following Expression 4.

[Expression 4]

$$\theta = \cos^{-1}\frac{D_2 d + \sqrt{L_2^2(L_2^2 + D_2^2 - d^2)}}{L_2^2 + D_2^2}$$

In the third embodiment, the stator of the solenoid actuator 33 includes, in addition to the tube 42: the anchor 40 corresponding to a one-side stator (lower stator); and the tubular core 41 corresponding to an another-side stator (upper stator). The anchor 40 is provided on the one side in the axial direction (lower side in the up-and-down direction in Fig. 14 to Fig. 16). The anchor 40 has the bottomed hole portion 40C corresponding to a hole into which the one side (lower side) of the armature 43 in the axial direction is inserted. The tubular core 41 is provided spaced apart from the anchor 40 to the another side in the axial direction (upper side in the up-and-down direction in Fig. 14 to Fig. 16). The tube 42 includes the second tube portion 42C and the tapered portion 42D, which extend continuously from the small-diameter portion 72 to the one side (lower side) in the axial direction and serve as an accommodating portion that accommodates the anchor 40. Besides, as expressed by Expression 1, a sum length ($L_1 + L_2$) of the large-diameter portion 71 and the small-diameter portion 72 and a sum length ($L_2 + L_3$) of the small-diameter portion 72 and the distance from the end edge of the small-diameter portion 72 on the one side in the axial direction to the bottom surface of the bottomed hole portion 40C are both shorter than the axial length ("l") of the armature 43. Further, as expressed by Expression 2, the large-diameter portion 71 is configured so as to be non-contactable with the armature 43. Further, as expressed by Expression 3, the bottomed hole portion 40C (and also the second tube portion 42C and the tapered portion 42D, which serve as the accommodating portion that accommodates the anchor 40) is also configured so as to be non-contactable with the armature 43.

Also in the third embodiment described above, as in the embodiments and the modification examples described above, the armature 43 has such a structure as to be contactable with the tube 42 (first tube portion 42B), and an inner peripheral surface of the armature 43 directly slides on the inner peripheral surface of the tube 42 (first tube portion 42B), more specifically, the inner peripheral surface of the small-diameter portion 72.

Thus, the armature 43 itself functions as a bearing. As a result, a bush (bearing member) for supporting the armature 43 can be omitted. Further, the tube 42 can be integrally molded in a cap-like shape, and hence oil-tightness (liquid-tightness) of the tube 42 can also be ensured. These configurations allow a reduction in the number of components and a reduction in costs.

Further, according to the third embodiment, the tube 42 (first tube portion 42B) has the large-diameter portion 71 and the small-diameter portion 72. Thus, as illustrated in Fig. 15 and Fig. 16, even when the armature 43 is inclined based on the clearance (gap) in the radial direction between the outer peripheral surface of the armature 43 and the inner peripheral surface of the tube 42 (first tube portion 42B), the contact of the end edge of the armature 43 on the another side (upper side in Fig. 14 to Fig. 16) in the axial direction with the inner peripheral surface of the tube 42 (first tube portion 42B) can be suppressed. As a result, sliding resistance of the armature 43 can be reduced, and hence hysteresis performance in thrust characteristics can be improved.

That is, in the third embodiment, a space defined by the tube 42 and the anchor 40 has inner diameters ($D_1$, $D_3$) at both ends in the axial direction larger than an inner diameter ($D_2$) of the small-diameter portion 72 corresponding to the remaining portion ($D_1 > D_2$, $D_3 > D_2$). That is, the vicinities of both ends of the space in the axial direction in which the armature 43 is moved (operated) in the axial direction are enlarged (each have a larger diameter) with respect to the small-diameter portion 72 corresponding to the remaining portion because of the presence of the large-diameter portion 71 of the tube 42 and the bottomed hole portion 40C of the anchor 40. Thus, the contact of both end portions (corner portions, end edges, peripheral edges) of the armature 43 in the axial direction with the inner peripheral surface of the tube 42 (large-diameter portion 71) and the inner peripheral surface of the anchor 40 (bottomed hole portion 40C) can be suppressed. As a result, the sliding resistance of the armature 43 can be reduced, and hence the hysteresis performance can be improved.

Further, for example, a case in which the space in which the movable element (armature) is moved (operated) is to be defined by a plurality of components is now considered. In this case, in order to ensure oil-tightness (liquid-tightness), high-cost measures such as brazing are required. Meanwhile, one end of the tube 42 in the axial direction is closed with the bottom portion 42A. That is, the tube 42 is integrally molded into a closed shape. Thus, the space in which the armature 43 is moved (operated) can easily be hermetically sealed to thereby easily ensure the oil-tightness (liquid-tightness).

Further, for example, a case in which the stator is formed of a magnetic material is considered. In this case, a strong side force (lateral force) may be generated between the stator and the movable element (armature) by magnetism and may result in an increase in friction and wear. Meanwhile, when the tube 42 is formed of a non-magnetic material, direct contact of a side surface (outer peripheral surface) of the armature 43 with the magnetic material can be prevented. That is, a distance can be ensured between the armature 43 and the tubular core 41 corresponding to the another-side stator (upper stator). As a result, the magnetic side force (attracting force in the radial direction generated by magnetism) can be reduced, and a frictional force generated on the armature 43 is reduced. That is, resistance and wear on a sliding surface can be reduced, and thus hysteresis can be reduced.

Further, for the end edge of the armature 43 on the another side (upper side in Fig. 14 to Fig. 16) in the axial direction, sliding resistance is not required to be taken into consideration because of the presence of the large-diameter portion 71 of the tube 42. Thus, the one side (lower side in Fig. 14 to Fig. 16) of the armature 43 in the axial direction can be formed in such a shape that is determined in consideration of the flow of magnetic flux in priority, and the another side (upper side in Fig. 14 to Fig. 16) in the axial direction can be formed in the same shape. Thus, the armature 43 can have the same shape on both sides in the axial direction. That is, the armature 43 can be designed to have such a shape that the one side (lower end) and the another side in the axial direction are symmetrical. Accordingly, a direction of assembly of the armature 43 is not restricted, and hence the assembly of the armature 43 is facilitated.

Further, a surface treatment for lubrication may be performed on the armature 43. In this case, a friction coefficient between the armature 43 and the tube 42 can be reduced. As a result, also in this aspect, the sliding resistance (frictional force) between the armature 43 and the tube 42 can be reduced, and hence hysteresis can be reduced.

Further, according to the third embodiment, as illustrated in Fig. 16 and expressed by Expression 1, Expression 2, Expression 3, and Expression 4, dimensions are regulated so that the end portions (corner portions, end edges, peripheral edges) of the armature 43 on both sides in the axial direction are not moved into the small-diameter portion 72 and the end portions (corner portions, end edges, peripheral edges) of the armature 43 on both sides in the axial direction are not abuttable against (not contactable with) the inner surfaces (inner peripheral surfaces) of the large-diameter portion 71 and the bottomed hole portion 40C corresponding to the hole portion. Thus, the contact of the end portions (corner portions, end edges, peripheral edges) of the armature 43 on both sides in the axial direction with the inner surfaces (inner peripheral surfaces) of the large-diameter portion 71 of the tube 42 and the bottomed hole portion 40C of the anchor 40 can be suppressed.

Further, according to the third embodiment, the large-diameter portion 71 and the small-diameter portion 72 of the tube 42 are connected through the inclined connecting portion 73 as a connecting portion having an inner diameter continuously decreasing from the large-diameter portion 71 toward the small-diameter portion 72. Thus, the inclined connecting portion 73 can serve as a slope (inclined surface) on which the armature 43 is allowed to slide. As a result, also in this aspect, the sliding resistance of the armature 43 can be reduced.

In the third embodiment, the armature 43 is moved in the axial direction inside the tube 42 described above, that is, the tube 42 having the large-diameter portion 71 and the small-diameter portion 72. The basic functions of the third embodiment are not significantly different from those of the first embodiment and the second embodiment described above. That is, as in the first embodiment and the second embodiment, the third embodiment enables both the suppression of hysteresis and a reduction in processing costs (manufacturing costs). In particular, according to the third embodiment, the tube 42 has the large-diameter portion 71 at an end portion of the tube 42, has a shape with a closed end (cap-like shape), and has a configuration in which the armature 43 is slid inside the tube 42. In this manner, both a reduction in costs through a reduction in the number of components and ensuring of excellent thrust characteristics can be achieved.

In the embodiments and the modification examples, the configuration in which the tube 42 is provided between the armature 43 and the tubular core 41 has been described by way of example. That is, in the embodiments and the modification examples, the tube 42 and the tubular core 41 correspond to a member (that is, a stator) that is fixed to the inner peripheral surface of the coil 39 and is opposed to the outer peripheral surface of the armature 43 with a gap therebetween. In this case, the armature 43 corresponding to a movable element slides on the inner periphery of the tube 42 corresponding to a stator. However, the configuration is not limited thereto. For example, the tube may be omitted, and a tubular core (housing for a magnetic member) may be provided on an outer side of the armature. In this case, the tubular core (housing for a magnetic member) corresponds to a member (that is, a stator) that is fixed to the inner peripheral surface of the coil and is opposed to the outer peripheral surface of the movable element (armature) with a gap therebetween. In other words, the armature corresponding to a movable element may be slid on the inner periphery of the tubular core (housing for a magnetic member) corresponding to a stator.

In the embodiments and the modification examples, the solenoid actuator 33 configured as a proportional solenoid has been described by way of example.

However, the solenoid actuator 33 is not limited thereto and may be configured as, for example, an ON/OFF-type solenoid.

In the embodiments and the modification examples, the multi-tube type shock absorber 1 including the outer tube 2 and the inner tube 4 has been described by way of example. However, the shock absorber is not limited thereto and may be, for example, a damping force adjustable shock absorber including a single tube type tube member (cylinder).

In the embodiments and the modification examples, a case in which the solenoid actuator 33 is used as a damping force variable actuator for the shock absorber 1, that is, the pilot valve element 32, which constitutes the pilot valve of the damping force adjustment valve 18, is a target to be driven by the solenoid actuator 33 has been described by way of example. However, the use of the solenoid is not limited thereto. For example, the solenoid can be widely used as an actuator to be incorporated into various types of mechanical devices such as a valve to be used for a hydraulic circuit, that is, a driving device for driving a target to be linearly driven.

It is apparent that the embodiments and the modification examples are exemplary and partial replacement or a combination of the configurations described in different embodiments and modification examples is possible.

According to the above-mentioned embodiments and/or modifications (hereinafter referred to simply as "embodiments"), the movable element has a portion that defines a smaller gap between its outer peripheral surface in the circumferential direction and the stator than a gap defined by the remaining portion and is contactable with the stator. Thus, the portion of the outer peripheral surface of the movable element, which is contactable with the stator, is allowed to function as a bearing for the movable element with respect to the stator. Accordingly, the inclination of the movable element can be suppressed without regulating the coaxiality of four components including two bushes (bearing members), a movable core (movable element), and a shaft portion and the dimensional tolerances thereof, which is required in the related art. As a result, the suppression of hysteresis and a reduction in processing costs (manufacturing costs) can be both achieved.

That is, the movable element is contactable with the stator. Thus, the movable element directly slides on the inner peripheral surface of the stator. As a result, the movable element itself functions as a bearing, and hence a bush (bearing member) for supporting the movable element can be omitted.

Further, the gap in the radial direction defined between the stator and the movable element includes: at least one small gap being small in size; and at least one large gap being larger in size than the small gap, which are arranged in the axial direction. In this case, the movable element has the flange portion formed on one portion in the axial direction, which projects in the radial direction with respect to the remaining portion. Besides, a portion of the movable element, that is, the flange portion defines the small gap between itself and the stator, and the remaining portion of the movable element defines the large gap between itself and the stator. Thus, axial misalignment of the movable element with respect to the stator can be reduced by the flange portion. Accordingly, a magnetic side force can be reduced, and hence a frictional force applied to the movable element can be reduced. Further, forging can be introduced into the processing of the movable element, and hence processing costs are reduced. As a result, hysteresis can be improved, and costs can be reduced.

According to the embodiments, the second gap between the outer peripheral surface of the driven member and the bearing member is set smaller than the first gap between the inner peripheral surface of the stator and the movable element. Thus, the inclination of the driven member can be suppressed by the bearing member, and the inclination of the movable element that is in abutment against the driven member in the axial direction can also be suppressed. As a result, the inclination of the movable element can be suppressed without regulating the coaxiality of four components including two bushes (bearing members), a movable core (movable element), and a shaft portion and the dimensional tolerances thereof, which is required in the related art. As a result, the suppression of hysteresis and a reduction in processing costs (manufacturing costs) can be both achieved.

According to the embodiments, the driven member is in surface contact with the movable element in a plane. Thus, the inclination of the movable element can be suppressed based on the surface contact between the driven member and the movable element in a plane.

According to the embodiments, the driven member has a portion being in surface contact with the movable element, which has a diameter larger than that of the remaining portion. Thus, the contact area between the driven member and the movable element can be increased. As a result, also in this aspect, the inclination of the movable element can be suppressed.

According to the embodiments, the movable element has the protruding portion that surrounds the abutment surface that is in abutment against the driven member. Thus, a shift of the abutment position (contact position) between the driven member and the movable element in the radial direction can be suppressed by the protruding portion.

According to the embodiments, the movable element has the abutment surface that is in abutment against the driven member, which is the bottom surface of the recessed portion. Thus, a shift of the abutment position (contact position) between the driven member and the movable element in the radial direction can be suppressed by the recessed portion.

According to the embodiments, the movable element has the flange portion. Thus, the flange portion is allowed to function as a bearing for the movable element with respect to the stator. Thus, also in this aspect, the inclination of the movable element can be suppressed.

According to the embodiments, a plurality of flange portions are formed in such a manner as to be spaced apart from each other in the axial direction of the movable element. Thus, the inclination of the movable element can be suppressed by the plurality of flange portions.

According to the embodiments, the gap in the radial direction defined between the stator and the movable element includes: at least one small gap being small in size; and at least one large gap being larger in size than the small gap, which are arranged in the axial direction. In this case, the stator includes the guide tube having a bottomed tubular shape that guides the movement of the movable element on the inner peripheral surface. Besides, the guide tube has: the large-diameter portion that defines the large gap between itself and the movable element; and the small-diameter portion that defines the small gap between itself and the movable element. Thus, the contact of the end portions of the movable element in the axial direction with the inner peripheral surface of the guide tube can be suppressed by the large-diameter portion, and hence the sliding resistance of the movable element can be reduced. Further, the guide tube has a bottomed tubular shape, that is, a closed shape with a bottom portion. Thus, the guide tube can be integrally molded, and hence the space in which the movable element is operated can easily be hermetically sealed. As a result, oil-tightness (liquid-tightness) can easily be ensured. These configurations can improve hysteresis and reduce costs.

According to the embodiments, the guide tube has the connecting portion that has an inner diameter continuously decreasing from the large-diameter portion toward the small-diameter portion to connect the large-diameter portion and the small-diameter portion.

Thus, the connecting portion can serve as a slope (inclined surface) on which the movable element is allowed to slide. As a result, also in this aspect, the sliding resistance of the movable element can be reduced.

According to the embodiments, the dimensions are regulated so that the end portions (corner portions, end edges, peripheral edges) of the movable element on both sides in the axial direction are not moved into the small-diameter portion and the end portions (corner portions, end edges, peripheral edges) of the movable element at both ends in the axial direction are not abuttable against (not contactable with) the inner surfaces of the inner peripheral surfaces of the large-diameter portion and the hole portion. Thus, the contact of the end portions (corner portions, end edges, peripheral edges) of the movable element on both sides in the axial direction with the inner surface (inner peripheral surface) of the stator (the large-diameter portion of the guide tube, the hole portion of the one-side stator) can be suppressed.

## REFERENCE SIGNS LIST

| | |
|---|---|
| 1 | shock absorber (damping force adjustable hydraulic shock absorber) |
| 2 | outer tube (cylinder) |
| 4 | inner tube (cylinder) |
| 5 | piston |
| 8 | piston rod |
| 17 | damping force adjustment mechanism (electromagnetic valve) |
| 18 | damping force adjustment valve |
| 28 | return spring (elastic member) |
| 32 | pilot valve element (valve mechanism) |
| 33 | solenoid actuator |
| 39 | coil |
| 40 | anchor (stator, one-side stator) |
| 40C | bottomed hole portion (hole portion) |
| 41 | tubular core (stator, another-side stator) |
| 42 | tube (stator, guide tube) |
| 42C | second tube portion (accommodating portion) |
| 42D | tapered portion (accommodating portion) |
| 43 | armature (movable element) |
| 44 | actuation pin (driven member) |
| 45 | bush bearing member) |
| 51 | flange portion |
| 53 | protruding portion |
| 55 | recessed portion |
| 71 | large-diameter portion |
| 72 | small-diameter portion |
| 73 | inclined connecting portion (connecting portion) |
| Sa | small gap |
| Sb | large gap |

**Claims**

1. A solenoid actuator, comprising:

   a coil having a cylindrical shape;
   a stator fixed to an inner peripheral surface of the coil; and
   a movable element, which is contactable with the stator and is movable on an inner peripheral surface of the stator toward one side in an axial direction in accordance with a current applied to the coil,
   wherein a gap in a radial direction defined between the stator and the movable element includes: at least one small gap being small in size; and at least one large gap being larger in size than the small gap, which are arranged in the axial direction,
   wherein the stator includes a guide tube having a bottomed tubular shape, which is configured to guide movement of the movable element on an inner peripheral surface,

wherein the guide tube has:

a large-diameter portion, which extends from a bottom portion side toward the one side in the axial direction and defines the large gap between the large-diameter portion and the movable element; and
a small-diameter portion, which extends directly or indirectly continuously from the large-diameter portion toward the one side in the axial direction, has an inner diameter smaller than an inner diameter of the large-diameter portion, and defines the small-gap between the small-diameter portion and the movable element.

2. The solenoid actuator according to claim 1, wherein the guide tube further includes a connecting portion, which has an inner diameter continuously decreasing from the large-diameter portion toward the small-diameter portion to connect the large-diameter portion and the small-diameter portion to each other.

3. The solenoid actuator according to claim 1,

wherein the stator further includes:

a one-side stator, which is provided on the one side in the axial direction and has a hole portion into which one side of the movable element in the axial direction is inserted; and
an another-side stator, which is provided spaced apart from the one-side stator toward another side in the axial direction,

wherein the guide tube further includes an accommodating portion, which extends continuously from the small-diameter portion toward the one side in the axial direction and accommodates the one-side stator,
wherein a sum length ($L_1+L_2$) of the large-diameter portion and the small-diameter portion is shorter than a length ("1") of the movable element in the axial direction, and
wherein a sum length ($L_2+L_3$) of the small-diameter portion and a distance from an end edge of the small-diameter portion on the one side in the axial direction to a bottom surface of the hole portion is shorter than the length ("1") of the movable element in the axial direction, and
wherein the large-diameter portion is configured so as to be non-contactable with the movable element.

4. A solenoid actuator, comprising:

a coil having a cylindrical shape;

a stator fixed to an inner peripheral surface of the coil; and
a movable element, which is contactable with the stator and is movable on an inner peripheral surface of the stator toward one side in an axial direction in accordance with a current applied to the coil,
wherein a gap in a radial direction defined between the stator and the movable element includes: at least one small gap being small in size; and at least one large gap being larger in size than the small gap, which are arranged in the axial direction,
wherein the movable element has a flange portion on a portion in the axial direction, the flange portion projecting in a radial direction with respect to a remaining portion, and the flange portion defines the small gap at a position at which the flange portion is opposed to the stator, and
wherein the remaining portion defines the large gap at a position at which the remaining portion is opposed to the stator.

5. An electromagnetic valve having a valve mechanism, the electromagnetic valve comprising:

a solenoid actuator including:

a coil having a cylindrical shape;
a stator fixed to an inner peripheral surface of the coil;
a movable element, which is movable toward one side in an axial direction with a first gap with respect to an inner peripheral surface of the stator in accordance with a current applied to the coil; and
a driven member being non-integrated with the movable element, the driven member being configured to actuate the valve mechanism when being brought into abutment against the movable element in the axial direction to be driven in the axial direction; and
a bearing member configured to guide the driven member in the axial direction with a second gap being smaller than the first gap with respect to an outer peripheral surface of the driven member; and

an elastic member configured to bias the driven member toward another side in the axial direction.

6. The electromagnetic valve according to claim 5, wherein the driven member is in surface contact with the movable element in a plane.

**7.** The electromagnetic valve according to claim 6, wherein a portion of the driven member, which is in surface contact with the movable element, has a diameter larger than a diameter of a remaining portion.

**8.** The electromagnetic valve according to claim 5, wherein the movable element has a protruding portion that surrounds an abutment surface that is in abutment against the driven member.

**9.** The electromagnetic valve according to claim 5, wherein the movable element has an abutment surface that is in abutment against the driven member, the abutment surface being a bottom surface of a recessed portion.

**10.** The electromagnetic valve according to claim 5, wherein the movable element has a flange portion that is a portion of an outer peripheral surface in a circumferential direction, the portion relatively projecting in a direction orthogonal to the axial direction relative to a remaining portion.

**11.** The electromagnetic valve according to claim 10, wherein the flange portion comprises a plurality of flange portions arranged spaced apart from each other in an axial direction of the movable element.

# Fig. 1

Fig. 2

EP 4 664 495 A1

Fig. 3

# Fig. 4

Fig. 5

# Fig. 6

## Fig. 7

## Fig. 8

Fig. 9

Fig. 10

## Fig. 11

## Fig. 12

# Fig. 13

Fig. 14

# Fig. 15

# Fig. 16

RANGE OF MOVEMENT OF ARMATURE

Fig. 17

(A) INDIRECT

(B) DIRECT

## INTERNATIONAL SEARCH REPORT

| International application No. |
| --- |
| **PCT/JP2024/003669** |

**A. CLASSIFICATION OF SUBJECT MATTER**

*H01F 7/121*(2006.01)i; *F16F 9/46*(2006.01)i; *F16K 31/06*(2006.01)i
FI: H01F7/16 F; F16F9/46; F16K31/06 305E; F16K31/06 305H; H01F7/16 D; H01F7/16 E

According to International Patent Classification (IPC) or to both national classification and IPC

**B. FIELDS SEARCHED**

Minimum documentation searched (classification system followed by classification symbols)

H01F7/121; F16F9/46; F16K31/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2012-112421 A (TOYOTA JIDOSHA KABUSHIKI KAISHA) 14 June 2012 (2012-06-14) paragraphs [0074]-[0076], fig. 4 | 4 |
| A | | 1-3, 5-11 |
| A | JP 2012-154404 A (TOYOTA JIDOSHA KABUSHIKI KAISHA) 16 August 2012 (2012-08-16) | 1-11 |
| A | JP 2016-127266 A (DENSO CORPORATION) 11 July 2016 (2016-07-11) | 1-11 |
| A | JP 2017-211062 A (HITACHI AUTOMOTIVE SYSTEMS, LTD.) 30 November 2017 (2017-11-30) | 1-11 |
| A | JP 2001-208233 A (AISIN SEIKI KABUSHIKI KAISHA) 03 August 2001 (2001-08-03) | 1-11 |
| A | JP 4-53208 A (SANMEI DENKI KK) 20 February 1992 (1992-02-20) | 1-11 |

✓ Further documents are listed in the continuation of Box C.   ✓ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **29 February 2024** | **19 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/003669** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CD-ROM of the specification and drawings annexed to the request of Japanese Utility Model Application No. 074078/1992 (Laid-open No. 038207/1994) (KONAN ELECTRIC COMPANY LIMITED) 20 May 1994 (1994-05-20) | 1-11 |
| A | Microfilm of the specification and drawings annexed to the request of Japanese Utility Model Application No. 004227/1981 (Laid-open No. 119507/1982) (CKD CONTROLS LTD.) 24 July 1982 (1982-07-24) | 1-11 |
| A | Microfilm of the specification and drawings annexed to the request of Japanese Utility Model Application No. 063172/1986 (Laid-open No. 176568/1987) (TOKYO KEIKI INC.) 10 November 1987 (1987-11-10) | 1-11 |

Form PCT/ISA/210 (second sheet) (July 2022)

**INTERNATIONAL SEARCH REPORT**
Information on patent family members

International application No.

**PCT/JP2024/003669**

| Patent document cited in search report | | | Publication date (day/month/year) | Patent family member(s) | | | Publication date (day/month/year) |
|---|---|---|---|---|---|---|---|
| JP | 2012-112421 | A | 14 June 2012 | (Family: none) | | | |
| JP | 2012-154404 | A | 16 August 2012 | (Family: none) | | | |
| JP | 2016-127266 | A | 11 July 2016 | US | 2017/0345537 | A1 | |
| | | | | WO | 2016/103662 | A1 | |
| | | | | CN | 107004488 | A | |
| JP | 2017-211062 | A | 30 November 2017 | (Family: none) | | | |
| JP | 2001-208233 | A | 03 August 2001 | US | 2001/0023930 | A1 | |
| | | | | DE | 10103975 | A1 | |
| JP | 4-53208 | A | 20 February 1992 | (Family: none) | | | |
| JP | 06-038207 | U1 | 20 May 1994 | (Family: none) | | | |
| JP | 57-119507 | U1 | 24 July 1982 | (Family: none) | | | |
| JP | 62-176568 | U1 | 10 November 1987 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017211062 A